# EUROPEAN PATENT APPLICATION

(11) **EP 4 510 711 A1**
(43) Date of publication of application: **19.02.2025**
(21) Application number: 22936962.4
(22) Date of filing: 15.04.2022
(51) Int. Cl.: H04W 52/02

(54) **WAKE-UP SIGNAL RECEIVING METHOD AND APPARATUS, WAKE-UP SIGNAL SENDING METHOD AND APPARATUS, WAKE-UP SIGNAL CONFIGURATION METHOD AND APPARATUS, AND DEVICE**

(71) Applicant: GUANGDONG OPPO MOBILE TELECOMMUNICATIONS CORP., LTD., Dongguan, Guangdong 523860 (CN)
(72) Inventor: HE, Chuanfeng, Dongguan, Guangdong 523860 (CN)
(74) Representative: Novagraaf Technologies
(86) International application number: PCT/CN2022/087177
(87) International publication number: WO 2023/197317

(57) **Abstract**

The present application relates to the technical field of communications, and provides a wake-up signal receiving method and apparatus, a wake-up signal sending method and apparatus, a wake-up signal configuration method and apparatus, and a device. The wake-up signal receiving method is applied to a terminal, and comprises: receiving a first wake-up signal, the first wake-up signal being used for indicating receive information of a downlink control channel, wherein the downlink control channel belongs to one of first NR channels, the first wake-up signal and the first NR channel are both orthogonal frequency division multi-carrier signals, and the basic parameter sets of the first wake-up signal and the first NR channel are different.

## Description

### TECHNICAL FIELD

The present disclosure relates to the technical field of communications, and in particular, relates to a method and apparatus for receiving wake-up signals, a method and apparatus for transmitting wake-up signals, a method and apparatus for configuring wake-up signals, and a device.

### BACKGROUND

In the evolution of the 5^{th} generation (5G) mobile communication systems, stricter requirements are imposed on power saving of a user equipment (UE) in a connected state.

In the related art, energy-saving signals are introduced, the energy-saving signals are used in combination with a discontinuous reception (DRX) mechanism. A terminal receives an indication of an energy-saving signal before an ON duration of DRX. In the case that the terminal needs to transmit or receive data in a DRX cycle, the energy-saving signal "wakes up" the terminal to monitor a physical downlink control channel (PDCCH) during the ON duration of the DRX. In the case that the terminal does not need to transmit or receive data in a DRX cycle, the energy-saving signal does not "wake up" the terminal, and the terminal is not required to monitor the PDCCH during the ON duration of the DRX.

Considering a scenario where a terminal with a wake-up receiver (WUR) coexists with a conventional terminal, WUR signals and new radio (NR) signals coexist. Therefore, how to implement the coexistence of WUR signals and NR signals is an urgent problem to be solved.

### SUMMARY

Embodiments of the present disclosure provide a method and apparatus for receiving wake-up signals, a method and apparatus for transmitting wake-up signals, a method and apparatus for configuring wake-up signals, and a device, which provide an implementation method for the coexistence of WUR signals and NR signals. The technical solutions are as follows.

According to some embodiments of the present disclosure, a method for receiving wake-up signals is provided. The method is applicable to a terminal and includes:
receiving a first wake-up signal, wherein the first wake-up signal is defined to indicate reception information of a downlink control channel;
wherein the downlink control channel is a first NR channel, the first wake-up signal and the first NR channel are both orthogonal frequency-division multicarrier signals, and a numerology of the first wake-up signal is different from a numerology of the first NR channel.

According to some embodiments of the present disclosure, a method for configuring wake-up signals is provided. The method is applicable to a terminal and includes:
receiving configuration information of a first wake-up signal, wherein the configuration information is defined to configure at least one of a time domain position of the first wake-up signal or a frequency domain position of the first wake-up signal;
wherein a configuration pattern of a time-frequency resource of the first wake-up signal is the same as a configuration pattern of a second NR channel.

According to some embodiments of the present disclosure, a method for transmitting wake-up signals is provided. The method is applicable to a network device and includes:
transmitting a first wake-up signal, wherein the first wake-up signal is defined to indicate reception information of a downlink control channel;
wherein the downlink control channel is a first NR channel, wherein the first wake-up signal and the first NR channel are both orthogonal frequency-division multicarrier signals, and a numerology of the first wake-up signal is different from a numerology of the first NR channel.

According to some embodiments of the present disclosure, a method for configuring wake-up signals is provided. The method is applicable to a network device and includes:
transmitting configuration information of a first wake-up signal, wherein the configuration information is defined to configure at least one of a time domain position of the first wake-up signal or a frequency domain position of the first wake-up signal;
wherein a configuration pattern of a time-frequency resource of the first wake-up signal is the same as a configuration pattern of a second NR channel.

According to some embodiments of the present disclosure, an apparatus for receiving wake-up signals is provided. The apparatus includes:
a receiver module, configured to receive a first wake-up signal, wherein the first wake-up signal is defined to indicate reception information of a downlink control channel;
wherein the downlink control channel is a first NR channel, wherein the first wake-up signal and the first NR channel are both orthogonal frequency-division multicarrier signals, and a numerology of the first wake-up signal is different from a numerology of the first NR channel.

According to some embodiments of the present disclosure, an apparatus for configuring wake-up signals is provided. The apparatus includes:
a receiver module, configured to receive configuration information of a first wake-up signal, wherein the configuration information is defined to configure at least one of a time domain position of the first wake-up signal or a frequency domain position of the first wake-up signal;
wherein a configuration pattern of a time-frequency resource of the first wake-up signal is the same as a configuration pattern of a second NR channel.

According to some embodiments of the present disclosure, an apparatus for transmitting wake-up signals is provided. The apparatus includes:
a transmitter module, configured to transmit a first wake-up signal, wherein the first wake-up signal is defined to indicate reception information of a downlink control channel;
wherein the downlink control channel is a first NR channel, wherein the first wake-up signal and the first NR channel are both orthogonal frequency-division multicarrier signals, and a numerology of the first wake-up signal is different from a numerology of the first NR channel.

According to some embodiments of the present disclosure, an apparatus for configuring wake-up signals is provided. The apparatus includes:
a transmitter module, configured to transmit configuration information of a first wake-up signal, wherein the configuration information is defined to configure at least one of a time domain position of the first wake-up signal or a frequency domain position of the first wake-up signal;
wherein a configuration pattern of a time-frequency resource of the first wake-up signal is the same as a configuration pattern of a second NR channel.

According to some embodiments of the present disclosure, a terminal is provided. The terminal includes a wake-up receiver; wherein
the wake-up receiver is configured to receive a first wake-up signal, wherein the first wake-up signal is defined to indicate reception information of a downlink control channel;
wherein the downlink control channel is a first NR channel, wherein the first wake-up signal and the first NR channel are both orthogonal frequency-division multicarrier signals, and a numerology of the first wake-up signal is different from a numerology of the first NR channel.

According to some embodiments of the present disclosure, a terminal is provided. The terminal includes a wake-up receiver; wherein
the wake-up receiver is configured to receive configuration information of a first wake-up signal, wherein the configuration information is defined to configure at least one of a time domain position of the first wake-up signal or a frequency domain position of the first wake-up signal;
wherein a configuration pattern of a time-frequency resource of the first wake-up signal is the same as a configuration pattern of a second NR channel.

According to some embodiments of the present disclosure, a network device is provided. The network device includes a transceiver; wherein
the transceiver is configured for a first wake-up signal, wherein the first wake-up signal is defined to indicate reception information of a downlink control channel;
wherein the downlink control channel is a first NR channel, wherein the first wake-up signal and the first NR channel are both orthogonal frequency-division multicarrier signals, and a numerology of the first wake-up signal is different from a numerology of the first NR channel.

According to some embodiments of the present disclosure, a network device is provided. The network device includes a transceiver; wherein
the transceiver is configured for configuration information of a first wake-up signal, and the configuration information is defined to configure at least one of a time domain position of the first wake-up signal or a frequency domain position of the first wake-up signal;
wherein a configuration pattern of a time-frequency resource of the first wake-up signal is the same as a configuration pattern of a second NR channel.

According to some embodiments of the present disclosure, a computer-readable storage medium is provided. The computer-readable storage medium stores one or more computer programs. The one or more computer programs, when loaded and run by a processor, cause the processor to perform the method for receiving wake-up signals, or the method for transmitting wake-up signals, or the method for configuring wake-up signals as described above.

According to some embodiments of the present disclosure, a chip is provided. The chip includes one or more programmable logic circuits and/or one or more program instructions. The chip, when running, is caused to perform the method for receiving wake-up signals, or the method for transmitting wake-up signals, or the method for configuring wake-up signals as described above.

According to some embodiments of the present disclosure, a computer program product is provided. The computer program product includes one or more computer instructions stored in a computer-readable storage medium. The one or more computer instructions, when read from the computer-readable storage medium and executed by a processor, cause the processor to perform the method for receiving wake-up signals, or the method for transmitting wake-up signals, or the method for configuring wake-up signals as described above.

The technical solutions according to the embodiments of the present disclosure achieve the following beneficial effects.

An implementation method for the coexistence of the first wake-up signal and the first NR channel is provided by differentiating the numerology of the first wake-up signal and the numerology of the first NR channel. Using a scenario where the first wake-up signal is a WUR signal and the first NR channel carries an NR signal as an example, the embodiments of the present disclosure provide an implementation method for the coexistence of the WUR signal and the NR signal.

### BRIEF DESCRIPTION OF THE DRAWINGS

For clearer descriptions of the technical solutions according to embodiments of the present disclosure, the accompanying drawings required for describing the embodiments are briefly introduced below. Apparently, the accompanying drawings in the following description show merely some embodiments of the present disclosure, and those of ordinary skill in the art may still derive other drawings from these accompanying drawings without creative efforts.
FIG. 1 is a schematic diagram of a zero-power communication system according to some exemplary embodiments of the present disclosure;
FIG. 2 is a schematic diagram of radio frequency (RF) energy harvesting according to some exemplary embodiments of the present disclosure;
FIG. 3 is a schematic diagram of a backscattering communication process according to some exemplary embodiments of the present disclosure;
FIG. 4 is a schematic diagram of resistive load modulation according to some exemplary embodiments of the present disclosure;
FIG. 5 is a schematic diagram of a coding mode according to some exemplary embodiments of the present disclosure;
FIG. 6 is a schematic diagram of a terminal with a WUR according to some exemplary embodiments of the present disclosure;
FIG. 7 is a schematic diagram of a mobile communication system according to some exemplary embodiments of the present disclosure;
FIG. 8 is a flowchart of a method for receiving and transmitting wake-up signals according to some exemplary embodiments of the present disclosure;
FIG. 9 is a schematic diagram of the generation of a WUR signal according to some exemplary embodiments of the present disclosure;
FIG. 10 is a schematic diagram of the generation of a WUR signal according to some exemplary embodiments of the present disclosure;
FIG. 11 is a flowchart of a method for receiving and transmitting wake-up signals according to some exemplary embodiments of the present disclosure;
FIG. 12 is a schematic diagram of WUR signal symbols and NR signal symbols according to some exemplary embodiments of the present disclosure;
FIG. 13 is a flowchart of a method for receiving and transmitting wake-up signals according to some exemplary embodiments of the present disclosure;
FIG. 14 is a schematic diagram of WUR signal symbols and NR signal symbols according to some exemplary embodiments of the present disclosure;
FIG. 15 is a schematic diagram of a BWP according to some exemplary embodiments of the present disclosure;
FIG. 16 is a schematic diagram of a BWP according to some other exemplary embodiments of the present disclosure;
FIG. 17 is a flowchart of a method for receiving and transmitting wake-up signals according to some exemplary embodiments of the present disclosure;
FIG. 18 is a flowchart of a method for configuring wake-up signals according to some exemplary embodiments of the present disclosure;
FIG. 19 is a flowchart of a method for configuring wake-up signals according to some exemplary embodiments of the present disclosure;
FIG. 20 is a schematic diagram of the time domain resource of a control resource set according to some exemplary embodiments of the present disclosure;
FIG. 21 is a schematic diagram of the time domain resource of a control resource set according to some other exemplary embodiments of the present disclosure;
FIG. 22 is a schematic diagram of a slot according to some exemplary embodiments of the present disclosure;
FIG. 23 is a schematic diagram of an apparatus for receiving wake-up signals according to some exemplary embodiments of the present disclosure;
FIG. 24 is a schematic diagram of an apparatus for configuring wake-up signals according to some exemplary embodiments of the present disclosure;
FIG. 25 is a schematic diagram of an apparatus for transmitting wake-up signals according to some exemplary embodiments of the present disclosure;
FIG. 26 is a schematic diagram of an apparatus for configuring wake-up signals according to some exemplary embodiments of the present disclosure; and
FIG. 27 is a schematic structural diagram of a communication device according to some exemplary embodiments of the present disclosure.

### DETAILED DESCRIPTION

For clearer descriptions of the objects, technical solutions, and advantages of the present disclosure, the embodiments of the present disclosure are further described in detail below with reference to the accompanying drawings.

A network architecture and a service scenario described in the embodiments of the present disclosure are intended to describe the technical solutions in the embodiments of the present disclosure more clearly, but do not constitute any limitation on the technical solutions according to the embodiments of the present disclosure. Those of ordinary skill in the art are clear that, with evolution of the network architecture and emergence of a new service scenario, the technical solutions according to the embodiments of the present disclosure are also applicable to similar technical problems.

Before the technical solutions of the present disclosure are described, some technical knowledge involved in the present disclosure is first described.

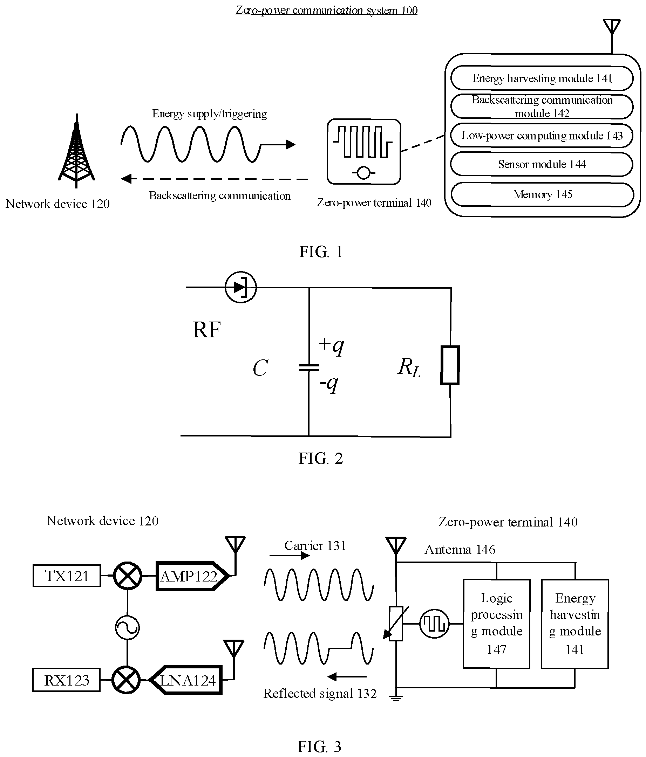

FIG. 1 is a schematic diagram of a zero-power communication system 100. The zero-power communication system 100 includes a network device 120 and a zero-power terminal 140.

The network device 120 is configured to transmit a wireless energy supply signal and a downlink communication signal to the zero-power terminal 140 and receive a backscattering signal from the zero-power terminal 140. The zero-power terminal 140 includes an energy harvesting module 141, a backscattering communication module 142, and a low-power computing module 143. The energy harvesting module 141 may harvest energy carried by radio waves in space for driving the low-power computing module 143 of the zero-power terminal 140 and implement backscattering communication. Upon acquiring the energy, the zero-power terminal 140 may receive a control signaling from the network device 120 and transmit data to the network device 120 in a backscattering manner according to the control signaling. The sent data may be from data stored in the zero-power terminal (e.g., identity or pre-written information, such as production date, brand, and manufacturer).

The zero-power terminal 140 may further include a sensor module 144 and a memory 145. The sensor module 144 may include various sensors. The zero-power terminal 140 may report, based on a zero-power mechanism, data collected by the various sensors. The memory 145 is configured to store some basic information (such as item identifiers) or acquire sensing data such as ambient temperature and ambient humidity.

The zero-power terminal does not need any battery, and at the same time, simple signal demodulation, decoding or coding, modulation, and other simple operations may be implemented by using the low-power computing module 143. Therefore, a zero-power module only requires a minimalist hardware design, making a zero-power device very low-cost and small in size.

In the following, key technologies of zero-power communication are introduced.

### •RF Power Harvesting

FIG. 2 is a schematic diagram of RF power harvesting. RF power harvesting is to harvest, based on a principle of electromagnetic induction, spatial electromagnetic wave energy using an RF module by electromagnetic induction and connection with a capacitor C and a load resistor R_{L} in a parallel relationship, and to acquire energy required to drive the zero-power terminal to operate, which is used to, for example, drive a low-power demodulation module, a modulation module, a sensor, and memory reading. Therefore, the zero-power terminal does not need any traditional battery.

### •Backscattering Communication

FIG. 3 is a schematic diagram of a backscattering communication process. The zero-power terminal 140 receives a wireless signal carrier 131 from a transmit (TX) module 121 of the network device 120 by using an asynchronous mapping procedure (AMP) 122, modulates the wireless signal carrier 131, loads to-be-sent information using a logic processing module 147, and harvests RF energy using the energy harvesting module 141. The zero-power terminal 140 radiates a modulated reflected signal 132 using an antenna 146. This information transmission process is called backscattering communication. A receive (RX) module 123 of the network device 120 receives the modulated reflected signal 132 using a low noise amplifier (LNA) 124. Backscattering and load modulation functions are inseparable. Load modulation is a process of completing modulation by adjusting and controlling circuit parameters of an oscillation circuit of the zero-power terminal 140 according to rhythms of data streams to cause parameters such as impedance of electronic tags to change accordingly.

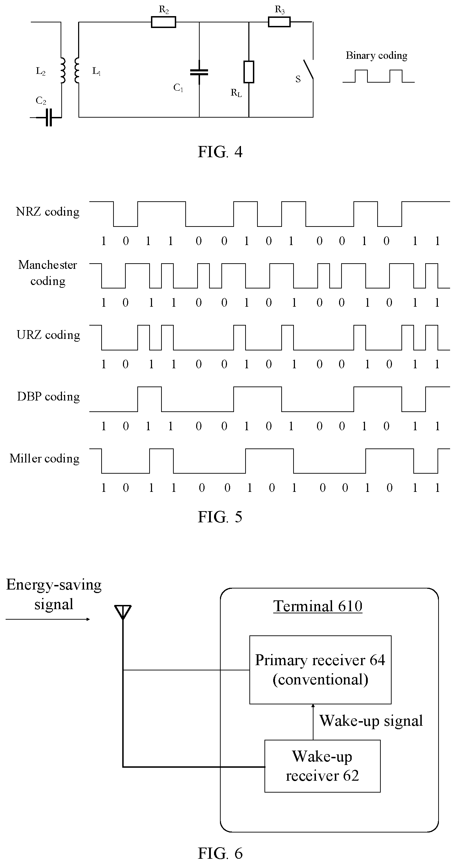

A load modulation technology mainly includes resistive load modulation and capacitive load modulation. FIG. 4 is a schematic diagram of resistive load modulation. In the resistive load modulation, the load resistor R_{L} is connected in parallel to a third resistor R₃, a switch S is turned on or turned off based on binary-coded control, turn-on or turn-off of the third resistor R₃ may cause a change in a voltage on a circuit, the load resistor R_{L} is connected in parallel to a first capacitor Ci, the load resistor R_{L} is connected in series to a second resistor R₂, and the second resistor R₂ is connected in series to a first inductor L₁. The first inductor L₁ is coupled with a second inductor L₂, and the second inductor L₂ is connected in series to a second capacitor C₂. Amplitude shift keying (ASK) may be implemented. That is, signal modulation and transmission are implemented by adjusting amplitude of the backscattering signal from the zero-power terminal. Similarly, in the capacitive load modulation, a resonant frequency of a circuit may be changed by turn-on or turn-off of a capacitor, such that frequency shift keying (FSK) is implemented. That is, signal modulation and transmission are implemented by adjusting an operating frequency of the backscattering signal from the zero-power terminal.

The zero-power terminal carries out information modulation on an incoming signal by load modulation, such that the backscattering communication process is implemented. The zero-power terminal has the following significant advantages: the terminal does not actively transmit any signal, and thus complex RF links such as a power amplifier (PA) and an RF filter are not required; the terminal is not required to actively generate any high-frequency signal, and thus a high-frequency crystal oscillator is not required; and the terminal carries out signal transmission by backscattering communication, without consuming energy of the terminal.

Next, a coding mode of zero-power communication is introduced.

FIG. 5 is a schematic diagram of a coding mode. For data transmitted by electronic tags, binary "1" and binary "0" may be represented by using different forms of codes. A radio frequency identification (RFID) system generally adopts one of: non-return-to-zero (NRZ) coding, Manchester coding, unipolar return-to-zero (URZ) coding, differential binary phase (DBP) coding, Miller coding, or differential coding. That is, 0 and 1 may be represented by using different pulse signals.

In NRZ coding, binary "1" is represented by a high level, and binary "0" is represented by a low level. FIG. 5 is a schematic diagram of levels of binary data 101100101001011 encoded by NRZ coding.

Manchester coding is also referred to as split-phase coding. In Manchester coding, a binary value is represented by a change (rise or fall) in a level in a half bit cycle within a bit length. A negative transition in a half bit cycle represents binary "1", and a positive transition in a half bit cycle represents binary "0". An error in data transmission means that when data bits sent by a plurality of electronic tags at the same time have different values, received rising and falling edges cancel each other out, resulting in an uninterrupted carrier signal throughout the entire bit length. In Manchester coding, a state without a change may not exist within the bit length. A reader-writer may determine, by using the error, a specific location where a collision occurs. Manchester coding helps discover data transmission errors, and is generally used for data transmission from the electronic tags to the reader-writer when load modulation or backscattering modulation of carriers is adopted. FIG. 5 is a schematic diagram of levels of binary data 101100101001011 encoded by Manchester coding.

In URZ coding, binary "1" is represented by a high level in a first half bit cycle of URZ coding, and binary "1" is represented by a low-level signal that lasts for an entire bit cycle. FIG. 5 is a schematic diagram of levels of binary data 101100101001011 encoded by URZ coding.

In DBP coding, binary "0" is represented by any edge in a half bit cycle, and binary "1" is represented by no edge. In addition, levels are inverted at the beginning of each bit cycle. A bit beat is relatively easy for the receiver to reconstruct. FIG. 5 is a schematic diagram of levels of binary data 101100101001011 encoded by DBP coding.

In Miller coding, binary "1" is represented by any edge in a half bit cycle, and binary "0" is represented by a constant level in a next bit cycle. Level alternation occurs at the beginning of a bit cycle. A bit beat is relatively easy for the receiver to reconstruct. FIG. 5 is a schematic diagram of levels of binary data 101100101001011 encoded by Miller coding.

In differential coding, each binary "1" to be transmitted may cause a change in a signal level, while for binary "0", the signal level remains the same.

Next, zero-power terminals are introduced in detail. Based on energy sources and usage modes of the zero-power terminals, the zero-power terminals may be classified into the following types.

### Passive zero-power terminal

Such a zero-power terminal does not need a built-in battery. When the zero-power terminal is close to a network device, the zero-power terminal is within a near field range formed by antenna radiation of the network device. Exemplarily, the network device is a reader-writer of the RFID system. Therefore, an antenna of the zero-power terminal generates an induced current by electromagnetic induction, and the induced current drives a low-power chip circuit of the zero-power terminal. Demodulation of a forward link signal and modulation of a backward link signal are implemented. For a backscattering link, the zero-power terminal carries out signal transmission by backscattering. The passive zero-power terminal does not need a built-in battery to drive either for the forward link or a reverse link, and is a true zero-power terminal. The passive zero-power terminal does not need any battery, in which an RF circuit and a baseband circuit are very simple. For example, the passive zero-power terminal does not need devices such as an LNA, a PA, a crystal oscillator, and an analog-to-digital converter (ADC), and has many advantages such as small size, light weight, very low price, and long service life.

### •Semi-passive zero-power terminal

The semi-passive zero-power terminal is not provided with any conventional battery, which may harvest radio wave energy by an RF energy harvesting module, and at the same time, store the harvested energy in an energy storage unit. Exemplarily, the energy storage unit is a capacitor. Upon acquiring the energy, the energy storage unit may drive a low-power chip-consumption circuit of the zero-power terminal. Demodulation of a forward link signal and modulation of a backward link signal are implemented. For a backscattering link, the zero-power terminal carries out signal transmission by backscattering.

The semi-passive zero-power terminal does not need any built-in battery to drive either for the forward link or a reverse link, and in operation, uses energy stored in the capacitor that is from radio energy harvested by the RF energy harvesting module, which is a true zero-power terminal. The semi-passive zero-power terminal inherits many advantages of the passive zero-power terminal, such as small size, light weight, very low price, and long service life.

### •Active zero-power terminal

The active zero-power terminal may be provided with a built-in battery. The battery is configured to drive a low-power chip circuit of the zero-power terminal. Demodulation of a forward link signal and modulation of a backward link signal are implemented. However, for a backscattering link, the zero-power terminal carries out signal transmission by backscattering. Zero power of the active zero-power terminal is mainly reflected in the fact that signal transmission in the reverse link does not require power of the terminal but uses backscattering. In the active zero-power terminal, the built-in battery supplies power to an RFID chip, and thus a reading/writing distance of a tag is increased and reliability of communication is improved. The active zero-power terminal is applicable to some scenarios where relatively high requirements are put forward for a communication distance and a read latency.

With the development of the communication industry, especially the increase in applications in the 5G industry, there are more and more types and application scenarios of connected devices or objects, and stricter requirements are imposed on prices and power consumption of communication terminals. The application of battery-free and low-cost passive Internet of things (IoT) devices has become a key technology for cellular IoT, such that types and numbers of network link terminals are increased, and thus Internet of everything is truly implemented. The passive IoT devices may be based on zero-power communication technology, such as RFID technology, and extended on this basis to be applicable to the cellular IoT.

Based on the idea of the zero-power terminal, the present disclosure provides a schematic diagram of a terminal 610 with a wake-up receiver. As shown in FIG. 6, the terminal 610 includes: a wake-up receiver 62 and a primary receiver 64.

The wake-up receiver 62 is a zero-power receiver or a low-power receiver with power consumption lower than a predetermined threshold. The wake-up receiver 62 receives an energy-saving signal in a first transmission mode.

The primary receiver 64 is a conventional receiver. The wake-up receiver 62 receives an energy-saving signal in a second transmission mode.

Under the same condition, for example, both for transmission of an energy-saving signal, the energy consumption in the first transmission mode is lower than the energy consumption in the second transmission mode. Distinguished from the primary receiver 64 of the UE, the wake-up receiver 62 is a primary receiver 64 dedicated to receiving the energy-saving signal. Compared with the primary receiver 64 of the UE, the wake-up receiver 62 is an extremely low-power or even zero-power receiver, which adopts technologies similar to radio frequency identification (RFID), including passive, envelope detection, energy harvesting, or the like. The wake-up receiver 62 may be activated and powered by a radio frequency signal, which is configured to drive the wake-up receiver 62 to receive the energy-saving signal and further transmit indication information to the primary receiver 64 of the UE, so as to wake up the primary receiver 64 of the UE for further reception of the control channel. The wake-up receiver 62 may be combined with the UE to serve as an additional module of the primary receiver of the UE or may be separately used as a wake-up function module of the UE.

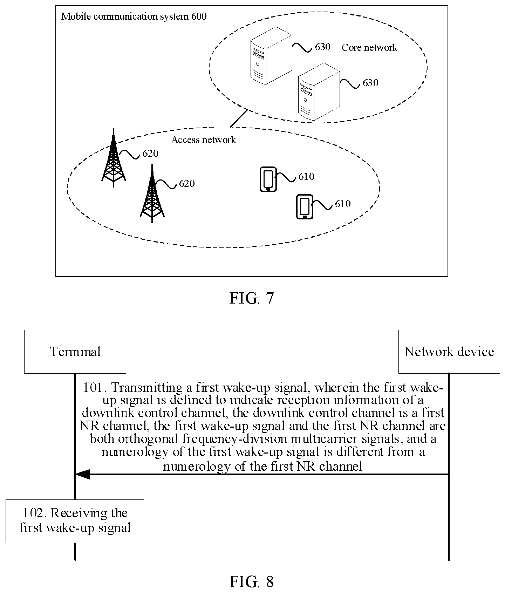

FIG. 7 illustrates a schematic diagram of a mobile communication system 600 according to some exemplary embodiments of the present disclosure. The mobile communication system 600 includes at least the following functional nodes:
a terminal 610: equipped with both a wake-up receiver 62 and a primary receiver 64, as shown in FIG. 6;
a network device 620: providing a communication link for the terminal 610 and/or providing the terminal 610 with radio waves based on radio wave energy harvested by an RF energy harvesting module, i.e., energy supply; and
a core network (CN) device 630: performing data processing and reception, and controlling and managing related services, mobility, user plane, control plane, gateway, and other functions of the terminal 610.

Illustratively, two implementation methods for terminal energy saving are given in the related art as follows:

### 1. Terminal energy saving based on the PDCCH

In the evolution of the 5G mobile communication systems, stricter requirements are imposed on power saving of UEs. For example, for the existing DRX mechanism, during each ON duration, a UE is required to continuously monitor the PDCCH to determine whether the network device has scheduled transmission to the UE. However, most UEs may not have the need to receive data transmission for a long period of time, but still needs to maintain a periodic wake-up mechanism to monitor possible downlink transmission. For such UEs, there is room for further optimization of power saving.

In the 3^{rd} Generation Partnership Project (3GPP), energy-saving signals have been introduced for the energy saving of UEs in a connected state to achieve further energy saving. The energy-saving signal is used in combination with the DRX mechanism, and the terminal receives an indication of the energy-saving signal before the ON duration of the DRX. In the case that the terminal needs to transmit or receive data in a DRX cycle, the energy-saving signal "wakes up" the terminal to monitor the PDCCH during the ON duration of the DRX. In the case that the terminal does not need to transmit or receive data in a DRX cycle, the energy-saving signal does not "wake up" the terminal, and the terminal is not required to monitor the PDCCH during the ON duration of the DRX. The energy-saving signal is carried over the PDCCH channel in downlink control information (DCI) format 2_6.

Subsequently, in the 3GPP, the energy saving for the process of receiving paging messages by the UE in radio resource control (RRC) idle/inactive states is optimized, and similar energy-saving signals are introduced. In the case that paging messages are received in a DRX manner, one paging occasion (PO) exists in one DRX cycle, and the UE receives paging messages only at the PO but does not receive paging messages at times other than the PO, so as to achieve power saving. However, in actual situations, the probability that the UE is paged may not be high, and the UE periodically detects the PDCCH at the corresponding PO, but does not detect the paging indication information transmitted to the UE, which causes power waste. Illustratively, the energy-saving signal introduced in the 3GPP is referred to as a paging early indication (PEI), which gives an indication to the UE on whether to receive the paging PDCCH at the target PO prior to arrival of the target PO. The energy-saving signal is carried over the PDCCH channel in DCI format 2_7.

For further enhancement of the energy saving of UEs in a connected state, an enhancement scheme of switching search space set groups has been introduced, and the detection of the PDCCH is skipped as required to save power, namely the PDCCH skipping scheme. The control information related to the switching of the search space set groups and the PDCCH skipping is also carried over the PDCCH.

### 2. Terminal energy saving based on a WUR

For further power saving of the UE, introduction of a WUR to receive the wake-up signal is considered. The WUR features extremely low cost, extremely low complexity, and extremely low power consumption and receives the wake-up signal mainly using an envelope detection-based approach. Therefore, the wake-up signal (WUS) received by the WUR is different from the signal carried over the PDCCH as defined by the existing standards in modulation mode, waveform, or the like. The WUS is mainly received over the envelope signal for performing an ASK modulation on the carrier signal. The demodulation of the envelope signal is also mainly performed by driving low-power circuits with the energy provided by the radio frequency signal, and thus the envelope signal may be passive. The WUR may also be powered by the terminal. Regardless of the power supply method, the receiver greatly reduces power consumption compared with the conventional receiver of the UE. The WUR may be combined with the UE to serve as an additional module of the UE receiver, or the WUR may be separately used as a wake-up function module of the UE.

Illustratively, the WUR is configured to receive the WUS. In the case that the UE is required to turn on the receiver, the network device may instruct the UE to turn on the receiver; and otherwise, the receiver of the UE may be in the off state.

FIG. 8 illustrates a flowchart of a method for receiving and transmitting WUSs according to some exemplary embodiments of the present disclosure. The method for receiving WUSs is applicable to a terminal, and the method for transmitting WUSs is applicable to a network device. The method includes the following processes.

**In process 101,** the network device transmits a first WUS to the terminal.

Illustratively, the first WUS indicates the reception information of a downlink control channel.

The downlink control channel is a first NR channel, the first WUS and the first NR channel are both orthogonal frequency-division multicarrier signals, and a numerology of the first WUS is different from a numerology of the first NR channel.

It should be understood that the first NR channel may refer to the channel to which the downlink control channel belongs or the signal carried over the channel. The signal carried over the first NR channel is different from the first WUS. For example, the signal carried over the first NR channel includes a second WUS, and in some embodiments, the first WUS is a WUR signal, and the second WUS is an NR signal.

In some embodiments, the numerology includes a subcarrier spacing, and the subcarrier spacing of the first WUS is configured to determine the symbol length of the first WUS. The subcarrier spacing is the reciprocal of the symbol length, and the larger the subcarrier spacing is, the shorter the symbol length is. For example, the first WUS uses a subcarrier spacing of 60 kHz and the second WUS uses a subcarrier spacing of 15 kHz, then the symbol length of the second WUS is 4 times that of the first WUS, and the network device may configure four symbols based on the subcarrier spacing of 15 kHz for the second WUS. The subcarrier spacing of the first NR channel is similar to that described above , which is not described herein any further.

In some embodiments, the numerology includes a guard interval length, and the guard interval length of the first WUS is configured to determine the interval length between two adjacent first WUSs. The guard interval length is 1/5 of the symbol length. In the case that the symbol period includes the guard interval, the guard interval length is 1/6 of the symbol length. The guard interval length of the first NR channel is similar to that described above, which is not described herein any further.

In some embodiments, the first NR channel includes at least one of: a channel in the NR system other than a synchronization signal/physical broadcast channel (PBCH) block (SSB) and a random access channel; an NR data channel; an NR feedback channel; or an NR control channel.

The channels may be categorized according to different classification criteria. For example, according to the transmission direction of the signal, the channels include an uplink channel, a downlink channel, and a sidelink channel. For another example, according to the usage of the signal, the channels include a data channel, a feedback channel, a control channel, a broadcast channel, and a random access channel.

In the embodiments of the present disclosure, the first NR channel is a channel in the NR system other than the SSB and the random access channel; or, the first NR channel is one of the NR data channel, NR feedback channel, or NR control channel. For example, the first NR channel is a PDCCH channel or a physical downlink shared channel (PDSCH) channel.

**In** process 102, the terminal receives the first WUS from the network device.

Illustratively, the first WUS indicates the reception information of a downlink control channel, the downlink control channel is a first NR channel, the first WUS and the first NR channel are both orthogonal frequency-division multicarrier signals, and a numerology of the first WUS is different from a numerology of the first NR channel.

For the related descriptions of the first WUS and the first NR channel, reference may be made to the foregoing content.

Upon receiving the first WUS from the network device, the terminal may determine the symbol interval length of a first signal and/or the interval length between two adjacent first WUSs based on the numerology of the first WUS.

According to the foregoing content, the first WUS and the first NR channel are both generated by modulating based on the orthogonal frequency-division multicarrier signal. In some embodiments, the modulation mode of the first WUS is on-off keying (OOK), and a multicarrier-OOK (MC-OOK) signal is formed upon OOK modulation of the multicarrier signal. The modulation mode of the first NR channel is quadrature phase-shift keying (QPSK) or quadrature amplitude modulation (QAM), and an OFDM modulated signal is formed upon modulation.

For example, the first WUS is a WUR signal and the first NR channel carries an NR signal, the modulation modes for the WUR signal and the NR signal are different.

Illustratively, the NR system uses orthogonal frequency division multiplexing (OFDM) technology, and the modulation mode for the NR signal is QPSK or QAM. The modulation of the NR signal is the modulation of multiple mutually orthogonal subcarriers in the frequency domain, and the orthogonal subcarriers may be modulated and demodulated using fast Fourier transform/inverse fast Fourier transform (FFT/IFFT).

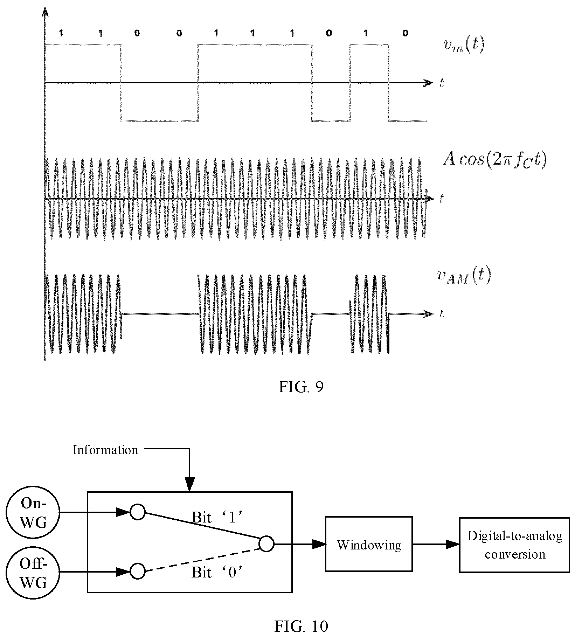

FIGS. 9 and 10 illustrate schematic diagrams of the generation of a WUR signal according to some exemplary embodiments of the present disclosure, respectively.

Illustratively, the generation of the WUR signal is based on OOK modulation. The OOK is also referred to as binary amplitude-shift keying (2ASK). The modulation principle of the OOK modulation is to modulate the amplitude of the carrier signal to a non-zero value and a zero value, which correspond to ON and OFF, respectively, and are used to represent information bits, respectively. The information bit 1 is modulated as ON, and the information bit 0 is modulated as OFF.

Referring to FIG. 10, an ON waveform generator (ON-WG) and an OFF waveform generator (Off-WG) are used to generate the waveforms of ON and OFF, respectively, corresponding to the information bit 1 and the information bit 0, respectively. Upon determining the information bits, the network device performs windowing and digital-to-analog conversion (Analog and RF) on the waveforms, and then transmits the generated waveforms to the terminal. The windowing refers to specific signal processing performed on the waveforms to prevent frequency spectrum leakage. Exemplarily, a waveform using OOK modulation and a signal for low-power wake-up function may be referred to as a WUR signal.

For example, the first WUS is a WUR signal, and the first NR channel carries an NR signal. According to the above content, considering a scenario where a terminal with a WUR (i.e., a zero-power terminal) coexists with a conventional terminal, the terminal with a WUR supports the first WUS, and thus the terminal with a WUR is capable of receiving the first WUS. The conventional terminal does not support the first WUS, and thus the conventional terminal is capable of receiving the NR signal. By differentiating the numerologies of the first WUS and the first NR channel, both the terminal with a WUR and the conventional terminal are capable of acquiring the reception information of the downlink control channel.

It should be understood that in the embodiments of the present disclosure, the processes on the terminal may independently construct embodiments illustrating the method for receiving WUSs, and the processes on the network device may independently construct embodiments illustrating the method for transmitting WUSs. For the specific explanation of the processes of the method for receiving and transmitting WUSs, reference may be made to the above content.

In summary, in the method for receiving and transmitting WUSs according to the embodiments of the present disclosure, an implementation method for the coexistence of the first WUS and the first NR channel is provided by differentiating the numerologies of the first WUS and the first NR channel. For example, the first WUS is a WUR signal, and the first NR channel carries an NR signal, the embodiments of the present disclosure provide an implementation method for the coexistence of the WUR signal and the NR signal.

In some embodiments, the numerology includes a subcarrier spacing to assist the terminal to determine the symbol length of the corresponding signal.

In some embodiments, the numerology includes a guard interval length to assist the terminal to determine the interval length between two adjacent signals.

In some embodiments, the embodiments of the present disclosure further provide different types of the first NR channel, and different modulation modes of the first WUS and the first NR channel.

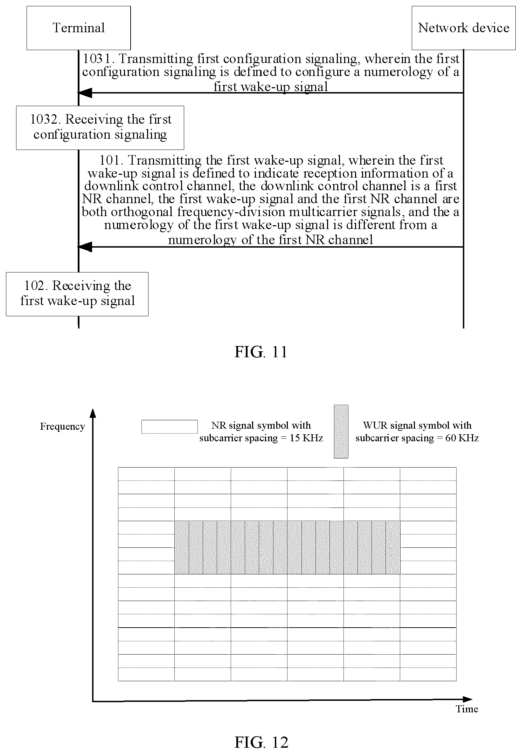

Based on FIG. 9, FIG. 11 illustrates a flowchart of a method for receiving and transmitting WUSs according to some exemplary embodiments of the present disclosure. The method for receiving WUSs is applicable to a terminal, and the method for transmitting WUSs is applicable to a network device. In some embodiments, the method further includes processes 1031 and 1032.

**In** process 1031, the network device transmits first configuration signaling to the terminal.

Illustratively, the first configuration signaling is defined to configure the numerology of the first WUS.

The first configuration signaling is RRC signaling, or physical layer signaling, or medium access control (MAC) layer signaling.

In some embodiments, the numerology includes a subcarrier spacing and/or a guard interval length. For the related descriptions of the subcarrier spacing and the guard interval length, reference may be made to the above content, which will not be described herein.

FIG. 12 illustrates a schematic diagram of WUR signal symbols and NR signal symbols according to some exemplary embodiments of the present disclosure. Part of the time-frequency resources carries NR signals and a subcarrier spacing of 15 KHz is used; and part of the time-frequency resources carries WUR signals and a subcarrier spacing of 60 KHz is used.

According to the above content, the numerology of the first WUS is different from the numerology of the first NR channel. In some embodiments, the numerology of the first WUS is determined based on the specific channel environment, such as the delay spread of the channel, maximum Doppler shift, cell radius, or the like.

Using a scenario where the first WUS is a WUR signal, and the first NR channel carries an NR signal as an example, the numerology of the WUR signal has the following two configuration patterns: Configuration pattern 1: The network device performs configuration; for example, the network device transmits the first configuration signaling over one of the RRC signaling, physical layer signaling, or MAC layer signaling, so as to achieve the dynamic change of the numerology of the WUR signal. Configuration pattern 2: In some embodiments, the numerology of the WUR signal also uses a preset value or has a preset corresponding relationship with a frequency range. For example, for frequency range 1 (FR1) and frequency range 2 (FR2), the numerology of the WUR signal uses corresponding preset values respectively.

**In process 1032,** the terminal receives the first configuration signaling.

Illustratively, the first configuration signaling is defined to configure the numerology of the first WUS, and the first configuration signaling is RRC signaling, or physical layer signaling, or MAC layer signaling.

For the related description of the first configuration signaling, reference may be made to the above content, which will not be described herein.

It should be understood that in the embodiments of the present disclosure, the processes on the terminal may independently construct embodiments illustrating the method for receiving WUSs, and the processes on the network device may independently construct embodiments illustrating the method for transmitting WUSs. For the specific explanation of the processes of the method for receiving and transmitting WUSs, reference may be made to the foregoing content.

In summary, in the method for receiving and transmitting WUSs according to the embodiments of the present disclosure, the first configuration signaling is transmitted to the terminal by the network device, such that the terminal is capable of acquiring the numerology of the first WUS.

Using a scenario where the first WUS is a WUR signal and the first NR channel carries an NR signal as an example, due to the differences between the WUR signal and the NR signal in the numerology and waveform, simultaneous transmission in time would cause additional complexity to the transmitting end. To reduce complexity, in the embodiments of the present disclosure, the time-division multiplexing (TDM) technology may be used to transmit the WUR signal and the NR signal separately in time.

In some embodiments, the first WUS and the first NR channel are transmitted in the time-division multiplexing mode.

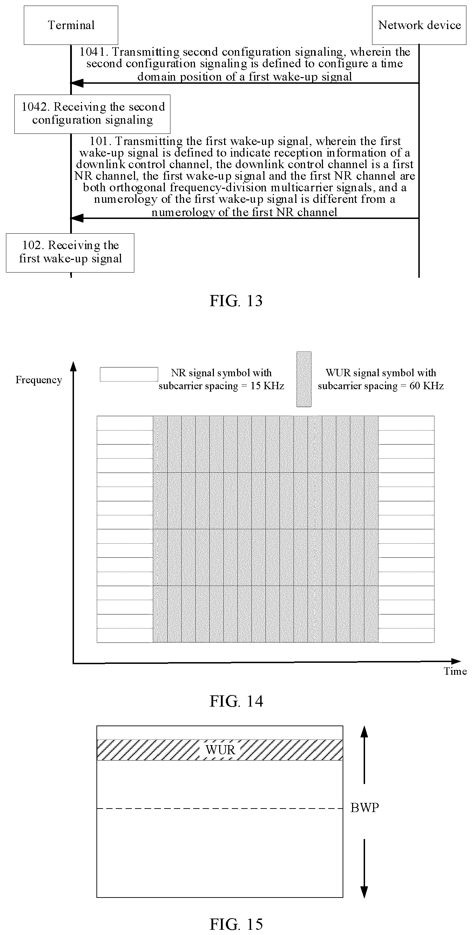

Based on FIG. 9, FIG. 13 illustrates a flowchart of a method for receiving and transmitting wake-up signals according to some exemplary embodiments of the present disclosure. The method for receiving WUSs is applicable to a terminal, and the method for transmitting WUSs is applicable to a network device. In some embodiments, the method further includes processes 1041 and 1042.

**In process 1041,** the network device transmits second configuration signaling to the terminal.

Illustratively, the second configuration signaling is defined to configure the time domain position of the first WUS.

Using a scenario where the first WUS is a WUR signal and the first NR channel carries an NR signal as an example, the network device may configure different time units for transmitting the WUR signal and the NR signal. In some embodiments, the time unit includes at least one of the radio frame, subframe, slot, or symbol.

Exemplarily, as the lengths of the slot and the symbol are related to the subcarrier spacing, in the case of configuring the time unit for transmitting the WUR signal, the network device may perform configuration based on a reference subcarrier spacing. For example, the network device configures the time unit for transmitting the WUR signal based on the subcarrier spacing of the NR signal.

FIG. 14 illustrates a schematic diagram of WUR signal symbols and NR signal symbols according to some exemplary embodiments of the present disclosure. The subcarrier spacing of the NR signal is 15 KHz, the subcarrier spacing of the WUR signal is 60 KHz, and the symbol length of the NR signal is 4 times that of the WUR signal. In this case, the network device may configure 4 symbols for the WUR signal based on the subcarrier spacing of 15 KHz, which may contain 16 symbols of the WUR signal.

In some embodiments, the reference subcarrier spacing is configured by the network device for the terminal. Process 1041 may be implemented as transmitting the second configuration signaling, wherein the second configuration signaling includes the reference subcarrier spacing and the time unit for transmitting the first WUS.

In some embodiments, the second configuration signaling is RRC signaling, or physical layer signaling, or MAC layer signaling.

**In process 1042**, the terminal receives the second configuration signaling.

Illustratively, the second configuration signaling is defined to configure the time domain position of the first WUS. For the related description of the second configuration signaling, reference may be made to the above content, which is not described herein any further.

Upon receiving the second configuration signaling, the terminal may determine the time domain position of the first WUS based on the second configuration signaling. For example, the second configuration signaling includes the reference subcarrier spacing and the time unit for transmitting the first WUS. The reference subcarrier spacing is the 15 KHz subcarrier spacing of the NR signal, and the time unit for transmitting the first WUS includes 4 symbols based on the reference subcarrier spacing.

It should be understood that in the embodiments of the present disclosure, the processes on the terminal may independently construct embodiments illustrating the method for receiving WUSs, and the processes on the network device may independently construct embodiments illustrating the method for transmitting WUSs. For the specific explanation of the processes of the method for receiving and transmitting WUSs, reference may be made to the above content.

In summary, in the method for receiving and transmitting WUSs according to the embodiments of the present disclosure, the second configuration signaling is transmitted to the terminal by the network device, such that the time-division multiplexing of the first WUS and the first NR channel is achieved, and difficulty in transmitting signals by the network device is reduced.

In some embodiments, the network device further configures the frequency domain position of the first WUS for the terminal.

Still using a scenario where the first WUS is a WUR signal and the first NR channel carries an NR signal as an example, illustratively, the frequency domain resource positions of the WUR signal and the NR signal are in the same bandwidth part (BWP). This situation is referred to as in band. Alternatively, the frequency domain resource positions of the WUR signal and the NR signal are in different BWPs, and the network device may configure a separate frequency domain resource for the WUR signal. For example, the network device configures a dedicated BWP for the terminal separately for receiving the WUR signal. This situation is referred to as out of band.

In some embodiments, the frequency domain resources occupied by the first WUS and the first NR channel are implemented in the following two implementations:
Implementation 1: The frequency domain resource occupied by the first WUS and the frequency domain resource occupied by the first NR channel are located in the same BWP.

Using the first WUS being a WUR signal as an example, FIG. 15 illustrates a schematic diagram of a BWP according to some exemplary embodiments of the present disclosure.

For the in-band situation, it is necessary to consider the frequency domain position of the frequency domain resource occupied by the WUR signal in the BWP. In some embodiments, the frequency domain resource occupied by the WUR signal is located near an edge of the BWP. For example, the frequency domain resource occupied by the WUR signal is located at an upper edge of the frequency domain or a lower edge of the frequency domain in the BWP. In the case that the frequency domain resource occupied by the WUR is located near the edge of the BWP, the fragmentation of the frequency domain resource may be reduced and the PDSCH may be scheduled to use continuous frequency domain resources.

In some embodiments, a guard band exists between the frequency domain subband occupied by the WUR signal and the frequency domain subband occupied by the NR signal, such that the interference between subbands is reduced.

Implementation 2: The frequency domain resource occupied by the first WUS and the frequency domain resource occupied by the first NR channel are located in different BWPs.

In some embodiments, the frequency domain resource occupied by the first WUS is located in a first BWP, and the frequency domain resource occupied by the first NR channel is located in a second BWP. The first BWP is a dedicated BWP for the first WUS, and the second BWP is a BWP occupied by the first NR channel.

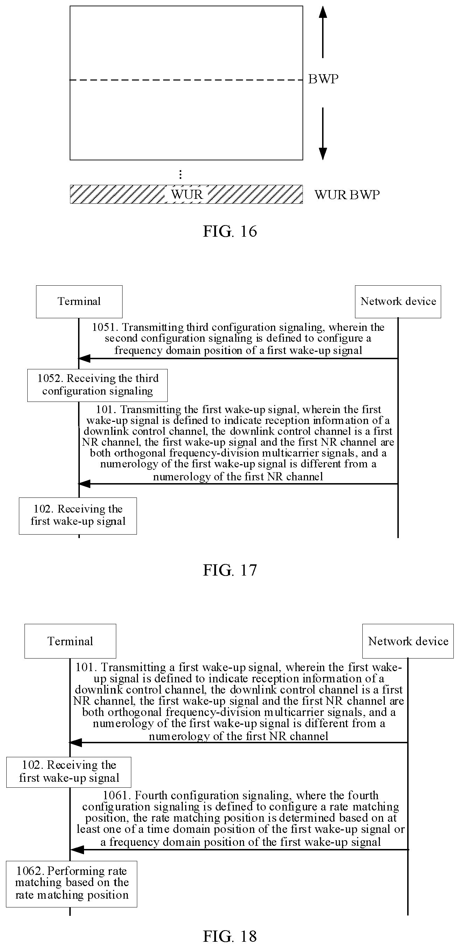

Taking the first WUS being a WUR signal as an example, FIG. 16 illustrates a schematic diagram of a BWP according to some other exemplary embodiments of the present disclosure. For the out-of-band situation, as the WUR receiver and the primary receiver of the terminal may work independently at the same time, the BWP occupied on the first NR channel is an NR BWP, and the network device configures a dedicated BWP of the WUR (WUR BWP) for the terminal separately, which will not cause the receiver of the terminal to switch between the NR BWP and the WUR BWP.

In the case that the frequency domain resources occupied by the first WUS and the first NR channel are located in different BWPs, the transmission of the WUR signal will not cause the backward compatibility problem. There is no transmission of the NR signal on the WUR BWP, such that the backward compatibility problem due to the coexistence of the NR signal and the WUR signal is avoided.

Based on FIG. 9, FIG. 17 illustrates a flowchart of a method for receiving and transmitting wake-up signals according to some exemplary embodiments of the present disclosure. The method for receiving WUSs is applicable to a terminal, and the method for transmitting WUSs is applicable to a network device. In some embodiments, the method further includes processes 1051 and 1052.

**In process 1051,** the network device transmits third configuration signaling to the terminal.

Illustratively, the third configuration signaling is defined to configure the frequency domain position of the first WUS.

In some embodiments, the third configuration signaling is RRC signaling, or physical layer signaling, or MAC layer signaling.

**In process 1052**, the terminal receives the third configuration signaling.

For the related description of the frequency domain position of the first WUS, reference may be made to the above content, which will not be described herein.

It should be understood that in the embodiments of the present disclosure, the processes on the terminal may independently construct embodiments illustrating the method for receiving WUSs, and the processes on the network device may independently construct embodiments illustrating the method for transmitting WUSs. For the specific explanation of the processes of the method for receiving and transmitting WUSs, reference may be made to the above content.

In summary, in the method for receiving and transmitting WUSs according to the embodiments of the present disclosure, two implementation methods for the frequency domain position of the first WUS are provided, which include: the frequency domain resources occupied by the first WUS and the first NR channel are located in the same BWP; or, the frequency domain resources occupied by the first WUS and the first NR channel are located in different BWPs.

In some embodiments, in the method for receiving and transmitting WUSs according to the embodiments of the present disclosure, the third configuration signaling is transmitted to the terminal by the network device, such that the terminal is capable of determining the frequency domain position of the first WUS.

Based on FIG. 9, FIG. 18 illustrates a flowchart of a method for receiving and transmitting wake-up signals according to some exemplary embodiments of the present disclosure. The method for receiving WUSs is applicable to a terminal, and the method for transmitting WUSs is applicable to a network device. In some embodiments, the method further includes processes 1061 and 1062.

**In** process 1061, the network device transmits fourth configuration signaling to the terminal.

Illustratively, the fourth configuration signaling is defined to configure a rate matching position.

The rate matching position is determined based on at least one of the time domain position and frequency domain position of the first WUS.

The time-frequency resource position of the first WUS includes a time domain position and/or a frequency domain position, and both the time domain position and the frequency domain position may be configured to the terminal by the network device. For example, the network device transmits the second configuration signaling to the terminal, wherein the second configuration signaling is defined to configure the time domain position of the first WUS; and the network device transmits the third configuration signaling to the terminal, wherein the third configuration signaling is defined to configure the frequency domain position of the first WUS. For the related descriptions of the second configuration signaling and the third configuration signaling, reference may be made to the above content, which is not described herein any further.

In some embodiments, the fourth configuration signaling is transmitted simultaneously with the second configuration signaling; or the fourth configuration signaling is transmitted simultaneously with the third configuration signaling; or the second configuration signaling, the third configuration signaling, and the fourth configuration signaling are transmitted simultaneously; or the fourth configuration signaling and the second configuration signaling are integrated into one signaling for transmission; or the fourth configuration signaling and the third configuration signaling are integrated into one signaling for transmission; or the second configuration signaling, the third configuration signaling, and the fourth configuration signaling are integrated into one signaling for transmission. It should be understood that the specific methods for transmitting the second configuration signaling, the third configuration signaling, and the fourth configuration signaling may be determined based on actual needs, and the above examples are merely illustrative and do not limit the present disclosure.

**In process 1062**, the terminal performs rate matching based on a rate matching position.

The rate matching position is determined based on at least one of the time domain position or frequency domain position of the first WUS.

In the communication between the network device and the terminal, in the case that there is a discrepancy between the allocated resource and the resource required for transmitting data, the data may be adapted to the allocated resource by slightly adjusting the bit rate, and this process may understood as rate matching. For example, in the case that the network device allocates resources for the PDSCH, the unavailable resource fragments within the range of the allocated resource fail to be accurately calculated. In this case, the network device first allocates a rough resource range to the terminal; upon determining the position and size of the unavailable resource fragments, the terminal avoids these resource fragments during resource mapping and the terminal moves the data falling within these resource fragments to other resources by rate matching.

Upon acquiring the fourth configuration signaling, the terminal is capable of acquiring the rate matching position; the terminal may then perform rate matching based on the rate matching position. For example, the network device configures the rate matching position to the terminal using rate match pattern (RateMatchPattern) signaling, and the terminal may perform rate matching on the reception of the PDSCH based on the rate matching position.

It should be understood that in the embodiments of the present disclosure, the processes on the terminal side may independently construct embodiments illustrating the method for receiving WUSs, and the processes on the network device side may independently construct embodiments illustrating the method for transmitting WUSs. For the specific explanation of the processes of the method for receiving and transmitting WUSs, reference may be made to the above content.

In summary, in the method for receiving and transmitting WUSs according to the embodiments of the present disclosure, the fourth configuration signaling is transmitted to the terminal by the network device, such that the terminal is capable of performing rate matching based on the rate matching position.

It should be understood that the embodiments in the above content may be combined. For example, the network device transmits the first configuration signaling and the second configuration signaling to the terminal. For another example, the network device transmits the first configuration signaling, the second configuration signaling, and the third configuration signaling to the terminal. For another example, the network device transmits the second configuration signaling and the third configuration signaling to the terminal. For another example, the network device transmits the first configuration signaling, the second configuration signaling, the third configuration signaling, and the fourth configuration signaling to the terminal. For another example, the network device transmits the second configuration signaling, the third configuration signaling, and the fourth configuration signaling to the terminal. For the related descriptions of the first configuration signaling, the second configuration signaling, the third configuration signaling, and the fourth configuration signaling, reference may be made to the above content, and the combined implementation methods that have not been listed all fall within the protection scope of the present disclosure, which is not described herein any further.

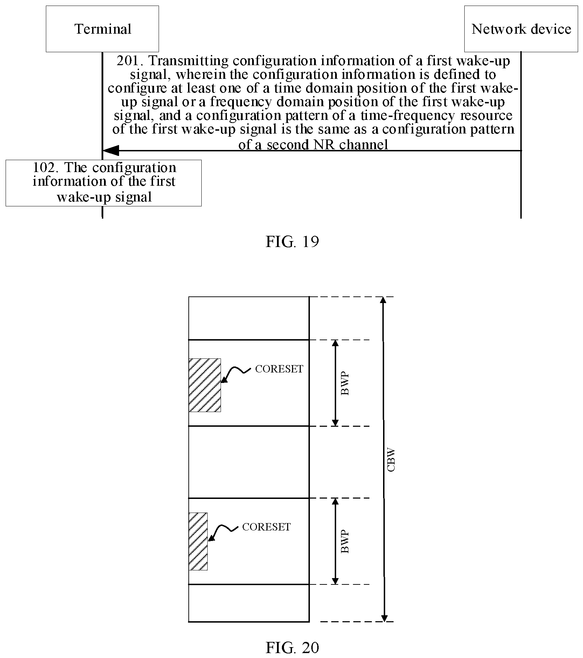

FIG. 19 illustrates a flowchart of a method for configuring WUSs according to some exemplary embodiments of the present disclosure. The method includes the following processes.

**In process 201**, a network device transmits configuration information of a first WUS to a terminal.

Illustratively, the configuration information is defined to configure at least one of the time domain position of the first WUS or the frequency domain position of the first WUS.

The configuration pattern of the time-frequency resource of the first WUS is the same as the configuration pattern of a second NR channel.

Similar to the first NR channel, the second NR channel may refer to the channel to which the downlink control channel belongs or the signal carried over the channel. The signal carried over the second NR channel is different from the first WUS. For example, the signal carried over the second NR channel is a third WUS, in some embodiments, the first WUS is a WUR signal, and the third WUS is an NR signal.

In some embodiments, the second NR channel includes at least one of: a PDCCH; a channel state information-reference signal (CSI-RS); a tracking reference signal (TRS); a phase tracking reference signal (PTRS); a physical broadcast channel (PBCH); an SSB; or a semi-persistent scheduling (SPS)-based PDSCH.

It should be understood that the second NR channel may be the same as the first NR channel, or the second NR channel may be different from the first NR channel. For example, the first NR channel is a PDCCH and the second NR channel is a PBCH.

In some embodiments, in the case that the second NR channel includes a PDCCH, the configuration information includes at least one of:
configuration information of the control resource set (CORESET) of the first WUS; or
configuration information of the search space of the first WUS.

For the PDCCH, the configuration information of the control resource set and/or the search space is configured for the terminal by the network device to assist the terminal to detect the PDCCH on the corresponding time-frequency resource. The control resource set is configured to describe the detection range of the PDCCH, and the search space is configured to describe the time domain position where the terminal detects the PDCCH.

In some embodiments, the configuration information of the control resource set includes at least one of: Control resource set ID (ControlResourceSetId), Frequency domain resources (frequencyDomainResources), Duration, cce-REG mapping type (cce-REG-MappingType), or Precoder granularity (precoderGranularity).

### - Control resource set ID (ControlResourceSetId)

Illustratively, the control resource set is the ID configured by the network device for different control resource sets and is configured for indexing the control resource sets. The control resource set ID may also be referred to as the control resource set index. In some embodiments, the serial number of the control resource set is an integer ranging from 1 to 11, and CORESET 0 indicates the control resource set in a broadcast message.

### - Frequency domain resources (frequencyDomainResources)

Illustratively, the frequency domain resource of the control resource set indicates the resource blocks (RBs) in the control resource set.

### - Duration

Illustratively, the duration of the control resource set indicates the number of consecutive symbols of the control resource set, with the value ranging from f 1, 2, 3}.

### - cce-REG mapping type (cce-REG-MappingType)

Illustratively, the cce-REG mapping type indicates the mapping method of the control resource set. The mapping method includes an interleaved mapping method and a non-interleaved mapping method.

### - Precoder granularity (precoderGranularity)

Illustratively, the precoder granularity indicates the type of precoding granularity of a demodulation reference signal (DMRS). The type of precoding granularity includes wideband precoding and narrowband precoding.

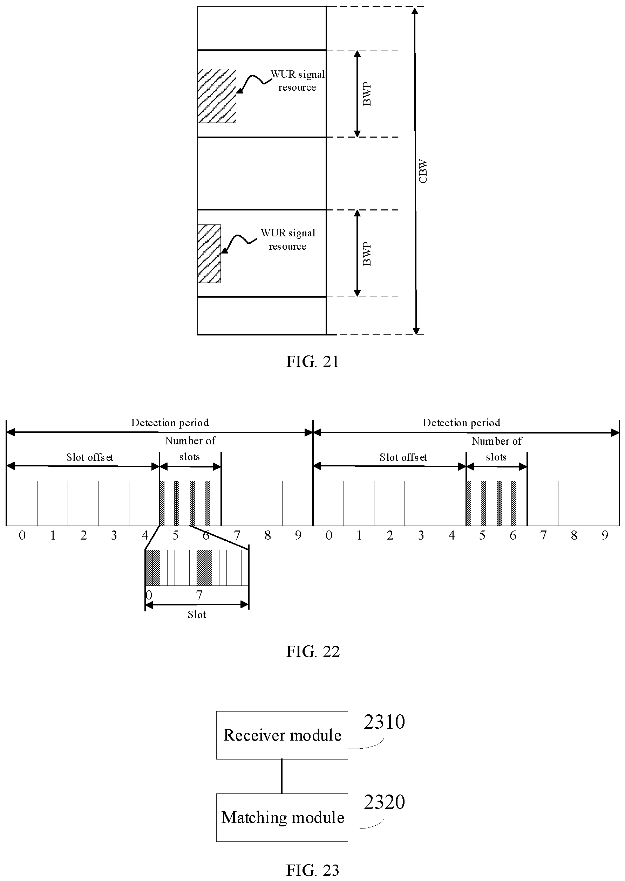

FIGS. 20 and 21 respectively illustrate schematic diagrams of the time domain resource of a control resource set according to some exemplary embodiments of the present disclosure.

Referring to FIG. 20, under a cell bandwidth (CBW), several BWPs are included, and each BWP may be configured with a plurality of control resource sets. Referring to FIG. 21, taking the first WUS being a WUR signal as an example, the terminal is capable of acquiring the time-frequency resource of the WUR signal using the above configuration method.

Illustratively, because the configuration pattern of the first WUS is the same as the configuration pattern of the second NR channel, it allows the terminal to reduce the configuration difficulty, such that the coexistence of the WUR signal and the second NR channel is achieved. In addition, for a terminal in the NR system, the resource of the WUR signal may be configured as the CORESET resource for rate matching. For example, rate matching is performed using the CORESET resource configured over RateMatchPattern signaling.

In some embodiments, the configuration information of the search space includes at least one of: Search space ID, Control resource set ID, Period and offset within the period of the monitoring slot, Duration, Monitoring position of the control resource set, PDCCH candidate configuration information, or Type of search space.

### - Search space ID

Illustratively, the search space ID is the ID configured by the network device for different search spaces and is configured for indexing the search spaces. The search space ID may also be referred to as the search space index.

### - Control resource set ID

Illustratively, the control resource set is the ID configured by the network device for different control resource sets and is configured for indexing the control resource sets. The control resource set ID may also be referred to as the control resource set index.

### -Period and offset within the period of the monitoring slot

Illustratively, the periods supported by NR include 1, 2, 4, 5, 8, 10, 16, 20, 40, 80, 160, 320, 640, 1280, or 2560 slots.

### - Duration

Illustratively, the duration of the search space indicates the number of consecutive slots for monitoring within the period of the PDCCH search space.

### - Monitoring position of the control resource set

Illustratively, the monitoring position of the control resource set indicates the position of the first symbol of the control resource set to be monitored within the monitoring slot of the PDCCH.

### - PDCCH candidate configuration information

### - Type of search space

Illustratively, the type of search space indicates the specific type of the PDCCH search space. The search space includes a common search space and a UE-specific search space. The terminal is capable of detecting the PDCCH based on an indicated type of search space.

In some embodiments, the configuration information of the search space is transmitted over RRC signaling.

Illustratively, the PDCCH corresponds to a plurality of search spaces, and the plurality of search spaces together form a search space set. In some embodiments, the time domain configuration information of the search space includes at least one of: a detection period, a slot offset, a number of slots, or a symbol position within the slot.

FIG. 22 is a schematic diagram of a slot according to some exemplary embodiments of the present disclosure. The detection period is 10 slots, the slot offset is five slots, the number of slots is 2, the CORESET corresponding to the control resource set ID contains two symbols, and within the monitoring slot, a symbol set of two CORESETs is monitored. The first symbol positions of the 2 CORESETs are symbol 0 and symbol 7 within the slot.

**In process 202,** a terminal receives configuration information of a first WUS from a network device.

Illustratively, the configuration information is defined to configure at least one of the time domain position of the first WUS or the frequency domain position of the first WUS.

The configuration pattern of the time-frequency resource of the first WUS is the same as the configuration pattern of a second NR channel.

Upon receiving the configuration information of the first WUS, the terminal may configure at least one of the time domain position of the first WUS or the frequency domain position of the first WUS based on the configuration information to achieve the configuration of the time-frequency resource.

It should be understood that in the embodiments of the present disclosure, the processes on the terminal may independently construct embodiments illustrating the method for configuring WUSs, and the processes on the network device may also independently construct embodiments illustrating the method for configuring WUSs. For the specific explanation of the processes of the method for configuring WUSs, reference may be made to the above content.

In summary, in the method for configuring WUSs according to the embodiments of the present disclosure, the network device transmits the configuration information of the first WUS to the terminal, such that at least one of the time domain position or the frequency domain position of the first WUS may be configured using the same configuration pattern as the second NR channel. This allows for the determination of the transmission resource of the first WUS, such that the coexistence of the first WUS and the second NR channel is achieved, and the complexity of configuring the frequency domain resource by the network device is reduced.

In some embodiments, in the method for configuring WUSs according to the embodiments of the present disclosure, different types of the second NR channel are further provided.

In some embodiments, in the method for configuring WUSs according to the embodiments of the present disclosure, the configuration information in the case where the second NR channel includes the PDCCH is further provided.

According to the above content, the first NR channel may be the same as the second NR channel, or the first NR channel may be different from the second NR channel. In some embodiments, in the method for configuring WUSs according to the embodiments of the present disclosure, the network device may also transmit at least one of the first configuration signaling, the second configuration signaling, the third configuration signaling, or the fourth configuration signaling to the terminal.

In some embodiments, the method for configuring WUSs according to the embodiments of the present disclosure further includes: transmitting, by the network device, a first WUS to the terminal, where the first WUS indicates the reception information of a downlink control channel. The downlink control channel is the second NR channel, the first WUS and the first NR channel are both orthogonal frequency-division multicarrier signals, and a numerology of the first WUS is different from a numerology of the second NR channel.

In some embodiments, the numerology includes a subcarrier spacing.

In some embodiments, the numerology includes a guard interval length.

In some embodiments, the method for configuring WUSs according to the embodiments of the present disclosure further includes: transmitting, by the network device, first configuration signaling to the terminal, wherein the first configuration signaling is defined to configure the numerology of the first WUS. The first configuration signaling is RRC signaling, or physical layer signaling, or MAC layer signaling.

In some embodiments, the modulation mode of the first WUS is OOK; and the modulation mode of the second NR channel is QPSK or QAM.

In some embodiments, the first WUS and the second NR channel are transmitted in the time-division multiplexing mode.

In some embodiments, the method for configuring WUSs according to the embodiments of the present disclosure further includes: transmitting, by the network device, second configuration signaling to the terminal, wherein the second configuration signaling is defined to configure the time domain position of the first WUS.

In some embodiments, the frequency domain resource occupied by the first WUS and the frequency domain resource occupied by the second NR channel are located in the same BWP.

In some embodiments, the frequency domain resource occupied by the first WUS and the frequency domain resource occupied by the second NR channel are located in different BWPs.

In some embodiments, the frequency domain resource occupied by the first WUS is located in a first BWP, and the frequency domain resource occupied by the second NR channel is located in a second BWP, wherein the second BWP is a BWP occupied by the second NR channel.

In some embodiments, the method for configuring WUSs according to the embodiments of the present disclosure further includes: transmitting, by the network device, third configuration signaling to the terminal, wherein the third configuration signaling is defined to configure the frequency domain position of the first WUS.

In some embodiments, the method for configuring WUSs according to the embodiments of the present disclosure further includes: transmitting, by the network device, fourth configuration signaling to the terminal, wherein the fourth configuration signaling is defined to configure the rate matching position; and performing, by the terminal, rate matching based on the rate matching position. The rate matching position is determined based on at least one of the time domain position of the first WUS or frequency domain position of the first WUS.

The rate matching position is determined based on at least one of the time domain position of the first WUS or frequency domain position of the first WUS.

In some embodiments, the first WUS is a WUR signal.

It should be understood that, for the above first configuration signaling, second configuration signaling, third configuration signaling, and fourth configuration signaling, reference may be made to the descriptions related to the first NR channel in the above content, which will not be described herein.

Description is given hereinafter using the case where the first WUS is a WUR signal, the following will explain the methods for receiving, transmitting, and configuring WUSs according to the embodiments of the present disclosure from four aspects regarding the generation of the WUR signal, time-division multiplexing, frequency domain resources, and the configuration method for time-frequency resources.

### 1. Generation of the WUR signal and configuration of the numerology.

Illustratively, the modulation mode for the WUR signal is OOK, and the numerology of the WUR signal is different from the numerology of the first NR channel (or the second NR channel). In some embodiments, the first NR channel (or the second NR channel) carries the NR signal, the modulation mode for the NR signal is QPSK or QAM, and the numerology of the WUR signal is different from the numerology of the NR signal.

For the related descriptions of the modulation mode for the WUR signal and the NR signal, reference may be made to the above content.

In some embodiments, the numerology includes a subcarrier spacing and/or a guard interval length.

The numerology of the WUR signal may be configured by the network device or use a preset value or have a preset corresponding relationship with the frequency band in which the WUR signal is located.

The numerology of the NR signal may be configured by the network device. Illustratively, except for the SSB (SS/PBCH block) and PRACH, other signals within a given BWP are the same. The subcarrier spacing of the SSB is related to the frequency range, FR1 uses 15 KHz or 30 KHz, and FR2 uses 120 KHz or 240 KHz. The subcarrier spacing of the PRACH is configured based on the network device. In some embodiments, other signals within the same BWP use the same subcarrier spacing, where FR1 may be configured to one of 15 kHz, 30 kHz, or 60 kHz; and FR2 may be configured to one of 60 kHz or 120 kHz.

In the case that both NR signals and WUR signals are present in the downlink transmission within the same BWP, the WUR signal may have a separately configured numerology, such as using a different subcarrier spacing than that of the NR signal.

To enable the receiver of the WUR signal to perform envelope detection, the average power of the signals modulated as on symbols and off symbols needs to meet a certain ratio, such as 20 dB. The ratio met by the average power of the signal depends on the demodulation performance of the receiver. Additionally, the sensitivity of the receiver is also an important indicator, such as -82 dBm.

Based on the differences in transmission characteristics, demodulation performance, and demodulation methods between the receiver of the WUR signal and the receiver of the NR signal, the network device configures different numerology configurations for the NR signal and the WUR signal in the transmission of signals. The numerology includes at least one of the subcarrier spacing, cyclic prefix (CP) length, or guard interval length. In some embodiments, different numerologies for the NR signal and the WUR signal may be determined according to specific channel environments, such as channel delay spread, maximum Doppler shift, cell radius, or the like.

### 2. Time-division multiplexing of the WUR signal and the NR signal.

Based on the differences in the numerologies and waveforms of the WUR signal and NR signal, the WUR signal and NR signal may be transmitted separately in time using time-division multiplexing technology.

In some embodiments, the network device transmits the second configuration signaling to the terminal to configure the time domain position of the WUR signal.

The network device may configure different time units for transmitting the WUR signal and the NR signal. In some embodiments, the time unit includes at least one of the radio frame, subframe, slot, or symbol. Exemplarily, the network device may configure the time unit for transmitting the WUR signal based on the subcarrier spacing of the NR signal. The subcarrier spacing of the NR signal is the reference subcarrier spacing used by the network device when configuring the WUR signal. In some embodiments, the second configuration signaling includes the subcarrier spacing of the NR signal and the time unit for transmitting the WUR signal.

Illustratively, for the generation of the WUR signal and the time-division multiplexing of the WUR signal and NR signal, to maintain backward compatibility of the WUR signal and NR system, conventional terminals need to perform rate matching on the time-frequency resource position of the WUR signal. Exemplarily, the network device configures the time-frequency resource position for a conventional terminal based on the configuration information in the NR system. For example, the network device configures the rate matching position for the conventional terminal over RateMatchPattern signaling, such that the conventional terminal is capable of performing rate matching on the reception of the PDSCH based on the rate matching position.

### 3. Frequency domain resources occupied by the WUR signal and the NR signal.

Illustratively, the frequency domain resource positions of the WUR signal and NR signal may be the same or different, corresponding to in-band and out-of-band situations, respectively.

In some embodiments, the frequency domain resource occupied by the WUR signal and the frequency domain resource occupied by the NR signal are located in the same BWP, which corresponds to the in-band situation. In this situation, the frequency domain position of the frequency domain resource occupied by the WUR signal within the BWP may be at the upper edge or the lower edge of the frequency domain, so as to reduce the fragmentation of the frequency domain resource and assist the scheduling of PDSCH to use continuous frequency domain resources. In some embodiments, a guard band exists between the frequency domain subband occupied by the WUR signal and the frequency domain subband occupied by the NR signal, to reduce the interference between subbands.

In some embodiments, the frequency domain resource occupied by the WUR signal and the frequency domain resource occupied by the NR signal are located in different BWPs, which corresponds to the out-of-band situation. In this situation, since the WUR receiver and the primary receiver can operate independently and simultaneously, configuring a dedicated BWP for the terminal by the network device will not cause the receiver to switch between different BWPs. At the same time, in the out-of-band situation, the transmission of the WUR signal will not cause the backward compatibility problem. In the BWP occupied by the WUR signal, there may be no transmission of the NR signal to avoid the backward compatibility problem caused by the coexistence of the NR signal and the WUR signal within the same BWP.

The frequency domain resource occupied by the WUR signal may be a dedicated BWP for the WUR signal, and the frequency domain resource occupied by the NR signal may be the BWP occupied by the first NR channel (or the second NR channel).

### 4. The configuration method for the time-frequency resource of the WUR signal is the same as the configuration method for the time-frequency resource of the NR signal.

Illustratively, the network device transmits the configuration information of the WUR signal to the terminal, and the configuration pattern of the time-frequency resource of the WUR signal is the same as the configuration pattern of the first NR channel (or the second NR channel).

Taking PDCCH as an example, the configuration information of the control resource set and/or the search space is configured for the terminal by the network device to assist the terminal to detect the PDCCH on the corresponding time-frequency resource. The control resource set is configured to describe the detection range of the PDCCH, and the search space is configured to describe the time domain position where the terminal detects the PDCCH.

Exemplarily, the configuration information of the time-frequency resource of the PDCCH includes: configuration information of the control resource set and/or configuration information of the search space. For the related descriptions of the configuration information of the control resource set and the search space, reference may be made to the above content, which will not be described herein.

For the configuration of the time-frequency resource of the WUR signal, the above embodiment only takes the PDCCH as an example. Other existing methods for configuring the time-frequency resource of channels or signals may also be used for the configuration of the time-frequency resource of the WUR signal. For example, such resources include CSI-RS, TRS, PTRS, PBCH, SSB, SPS-based PDSCH resources, or the like.

It should be understood that the descriptions of the four aspects regarding the generation of the WUR signal, time-division multiplexing, frequency domain resources, and the configuration method for the time-frequency resources may be implemented separately as embodiments related to the wake-up signal or may be combined and implemented as embodiments related to the wake-up signal. For the specific combinations, reference may be made to the above content, which will not be described herein.

The following are the apparatus embodiments of the present disclosure, for details not described in the apparatus embodiments, reference may be made to the corresponding descriptions in the above method embodiments. These details will not be described herein.

FIG. 23 illustrates a schematic diagram of an apparatus for receiving WUSs according to some exemplary embodiments of the present disclosure. The apparatus includes:
a receiver module 2310, configured to receive a first WUS, where the first WUS indicates the reception information of a downlink control channel.

The downlink control channel is a first NR channel, the first WUS and the first NR channel are both orthogonal frequency-division multicarrier signals, and a numerology of the first WUS is different from a numerology of the first NR channel.

In some embodiments, the numerology includes a subcarrier spacing.

In some embodiments, the numerology includes a guard interval length.

In some embodiments, the first NR channel includes at least one of: a channel in the NR system other than the SSB and the random access channel; an NR data channel; an NR feedback channel; or an NR control channel.

In some embodiments, the receiver module 2310 is further configured to receive first configuration signaling from a network device, wherein the first configuration signaling is defined to configure the numerology of the first WUS. The first configuration signaling is RRC signaling, or physical layer signaling, or MAC layer signaling.

In some embodiments, the modulation mode of the first WUS is OOK; and the modulation mode of the first NR channel is QPSK or QAM.

In some embodiments, the first WUS and the first NR channel are transmitted in the time-division multiplexing mode.

In some embodiments, the receiver module 2310 is further configured to receive second configuration signaling, wherein the second configuration signaling is defined to configure the time domain position of the first WUS.

In some embodiments, the frequency domain resource occupied by the first WUS and the frequency domain resource occupied by the first NR channel are located in the same BWP.

In some embodiments, the frequency domain resource occupied by the first WUS and the frequency domain resource occupied by the first NR channel are located in different BWPs.

In some embodiments, the frequency domain resource occupied by the first WUS is located in a first BWP, and the frequency domain resource occupied by the first NR channel is located in a second BWP, where the second BWP is a BWP occupied by the first NR channel.

In some embodiments, the receiver module 2310 is further configured to receive third configuration signaling, wherein the third configuration signaling is defined to configure the frequency domain position of the first WUS.

In some embodiments, the apparatus further includes: a matching module 2320, configured to perform rate matching based on a rate matching position, wherein the rate matching position is determined based on at least one of the time domain position of the first WUS or the frequency domain position of the first WUS.

In some embodiments, the first WUS is a WUR signal.

In summary, in the apparatus for receiving WUSs according to the embodiments of the present disclosure, an implementation method for the coexistence of the first WUS and the first NR channel is provided by differentiating the numerologies of the first WUS and the first NR channel. Taking the first WUS being a WUR signal and the first NR channel carrying an NR signal as an example, the embodiments of the present disclosure provide an implementation method for the coexistence of the WUR signal and the NR signal.

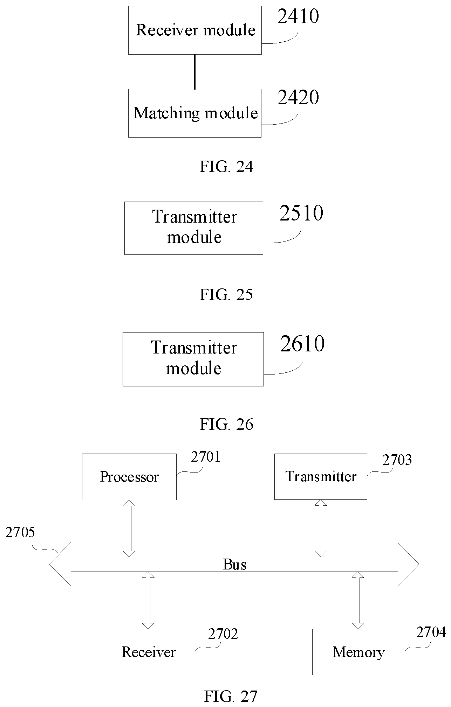

FIG. 24 is a schematic diagram of an apparatus for configuring WUSs according to some exemplary embodiments of the present disclosure. The apparatus includes:
a receiver module 2410, configured to receive configuration information of a first WUS, wherein the configuration information is defined to configure at least one of the time domain position of the first WUS or the frequency domain position of the first WUS.

The configuration pattern of the time-frequency resource of the first WUS is the same as the configuration pattern of a second NR channel.

In some embodiments, the second NR channel includes at least one of: PDCCH; CSI-RS; TRS; PTRS; PBCH; SSB; or SPS-based PDSCH.

In some embodiments, the second NR channel includes the PDCCH, and the configuration information includes at least one of: configuration information of a control resource set of the first WUS; or configuration information of a search space of the WUS.

In some embodiments, the receiver module 2410 is further configured to receive a first WUS, wherein the first WUS indicates the reception information of a downlink control channel. The downlink control channel is the second NR channel, the first WUS and the first NR channel are both orthogonal frequency-division multicarrier signals, and the numerology of the first WUS is different from the numerology of the second NR channel.

In some embodiments, the numerology includes a subcarrier spacing.

In some embodiments, the numerology includes a guard interval length.

In some embodiments, the receiver module 2410 is further configured to receive first configuration signaling from a network device, wherein the first configuration signaling is defined to configure the numerology of the first WUS. The first configuration signaling is RRC signaling, or physical layer signaling, or MAC layer signaling.

In some embodiments, the modulation mode of the first WUS is OOK; and the modulation mode of the second NR channel is QPSK or QAM.

In some embodiments, the first WUS and the second NR channel are transmitted in the time-division multiplexing mode.

In some embodiments, the receiver module 2410 is further configured to receive second configuration signaling, wherein the second configuration signaling is defined to configure the time domain position of the first WUS.

In some embodiments, the frequency domain resource occupied by the first WUS and the frequency domain resource occupied by the second NR channel are located in the same BWP.

In some embodiments, the frequency domain resource occupied by the first WUS and the frequency domain resource occupied by the second NR channel are located in different BWPs.

In some embodiments, the frequency domain resource occupied by the first WUS is located in a first BWP, and the frequency domain resource occupied by the second NR channel is located in a second BWP, wherein the second BWP is a BWP occupied by the second NR channel.

In some embodiments, the receiver module 2410 is further configured to receive third configuration signaling, wherein the third configuration signaling is defined to configure the frequency domain position of the first WUS.

In some embodiments, the apparatus further includes: a matching module 2420, configured to perform rate matching based on a rate matching position, wherein the rate matching position is determined based on at least one of the time domain position of the first WUS or the frequency domain position of the first WUS.

In some embodiments, the first WUS is a WUR signal.

In summary, in the apparatus for configuring WUSs according to the embodiments of the present disclosure, the configuration information of the first WUS is transmitted to the terminal, such that at least one of the time domain position or the frequency domain position of the first WUS may be configured using the same configuration pattern as the second NR channel. This allows for the determination of the transmission resource of the first WUS, such that the coexistence of the first WUS and the second NR channel is achieved.

FIG. 25 is a schematic diagram of an apparatus for transmitting WUSs according to some exemplary embodiments of the present disclosure. The apparatus includes:
a transmitter module 2510, configured to transmit a first WUS, wherein the first WUS indicates the reception information of a downlink control channel.

The downlink control channel is a first NR channel, the first WUS and the first NR channel are both orthogonal frequency-division multicarrier signals, and a numerology of the first WUS is different from a numerology of the first NR channel.

In some embodiments, the numerology includes a subcarrier spacing.

In some embodiments, the numerology includes a guard interval length.

In some embodiments, the first NR channel includes at least one of: a channel in the NR system other than the SSB and the random access channel; an NR data channel; an NR feedback channel; or an NR control channel.

In some embodiments, the transmitter module 2510 is further configured to transmit first configuration signaling, wherein the first configuration signaling is defined to configure the numerology of the first WUS. The first configuration signaling is RRC signaling, or physical layer signaling, or MAC layer signaling.

In some embodiments, the modulation mode of the first WUS is OOK; and the modulation mode of the first NR channel is QPSK or QAM.

In some embodiments, the first WUS and the first NR channel are transmitted in the time-division multiplexing mode.

In some embodiments, the transmitter module 2510 is further configured to transmit second configuration signaling, wherein the second configuration signaling is defined to configure the time domain position of the first WUS.

In some embodiments, the frequency domain resource occupied by the first WUS and the frequency domain resource occupied by the first NR channel are located in the same BWP.

In some embodiments, the frequency domain resource occupied by the first WUS and the frequency domain resource occupied by the first NR channel are located in different BWPs.

In some embodiments, the frequency domain resource occupied by the first WUS is located in a first BWP, and the frequency domain resource occupied by the first NR channel is located in a second BWP, wherein the second BWP is a BWP occupied by the first NR channel.

In some embodiments, the transmitter module 2510 is further configured to transmit third configuration signaling, wherein the third configuration signaling is defined to configure the frequency domain position of the first WUS.

In some embodiments, the transmitter module 2510 is further configured to transmit fourth configuration signaling, wherein the fourth configuration signaling is defined to configure the rate matching position. The rate matching position is determined based on at least one of the time domain position of the first WUS or the frequency domain position of the first WUS.

In some embodiments, the first WUS is a WUR signal.

In summary, in the apparatus for transmitting WUSs according to the embodiments of the present disclosure, an implementation method for the coexistence of the first WUS and the first NR channel is provided by differentiating the numerologies of the first WUS and the first NR channel. Taking the first WUS being a WUR signal and the first NR channel carrying an NR signal as an example, the embodiments of the present disclosure provide an implementation method for the coexistence of the WUR signal and the NR signal.

FIG. 26 is a schematic diagram of an apparatus for configuring WUSs according to some exemplary embodiments of the present disclosure. The apparatus includes:
a transmitter module 2610, configured to transmit configuration information of a first WUS, wherein the configuration information is defined to configure at least one of the time domain position of the first WUS or the frequency domain position of the first WUS.

The configuration pattern of the time-frequency resource of the first WUS is the same as the configuration pattern of a second NR channel.

In some embodiments, the second NR channel includes at least one of: PDCCH; CSI-RS; TRS; PTRS; PBCH; SSB; or SPS-based PDSCH.

In some embodiments, the second NR channel includes the PDCCH, and the configuration information includes at least one of: configuration information of a control resource set of the first WUS; or configuration information of a search space of the WUS.

In some embodiments, the transmitter module 2610 is further configured to transmit a first WUS, wherein the first WUS indicates the reception information of a downlink control channel. The downlink control channel is a first NR channel, the first WUS and the first NR channel are both orthogonal frequency-division multicarrier signals, and the numerology of the first WUS is different from the numerology of the first NR channel.

In some embodiments, the numerology includes a subcarrier spacing.

In some embodiments, the numerology includes a guard interval length.

In some embodiments, the transmitter module 2610 is further configured to transmit first configuration signaling, wherein the first configuration signaling is defined to configure the numerology of the first WUS. The first configuration signaling is RRC signaling, or physical layer signaling, or MAC layer signaling.

In some embodiments, the modulation mode of the first WUS is OOK; and the modulation mode of the first NR channel is QPSK or QAM.

In some embodiments, the first WUS and the first NR channel are transmitted in the time-division multiplexing mode.

In some embodiments, the transmitter module 2610 is further configured to transmit second configuration signaling, wherein the second configuration signaling is defined to configure the time domain position of the first WUS.

In some embodiments, the frequency domain resource occupied by the first WUS and the frequency domain resource occupied by the first NR channel are located in the same BWP.

In some embodiments, the frequency domain resource occupied by the first WUS and the frequency domain resource occupied by the first NR channel are located in different BWPs.

In some embodiments, the frequency domain resource occupied by the first WUS is located in a first BWP, and the frequency domain resource occupied by the first NR channel is located in a second BWP, wherein the second BWP is a BWP occupied by the second NR channel.

In some embodiments, the transmitter module 2610 is further configured to transmit third configuration signaling, wherein the third configuration signaling is defined to configure the frequency domain position of the first WUS.

In some embodiments, the transmitter module 2610 is further configured to transmit fourth configuration signaling, wherein the fourth configuration signaling is defined to configure the rate matching position. The rate matching position is determined based on at least one of the time domain position of the first WUS or the frequency domain position of the first WUS.

In some embodiments, the first WUS is a WUR signal.

In summary, in the apparatus for configuring WUSs according to the embodiments of the present disclosure, the configuration information of the first WUS is transmitted to the terminal, such that at least one of the time domain position or the frequency domain position of the first WUS may be configured using the same configuration pattern as the second NR channel. This allows for the determination of the transmission resource of the first WUS, such that the coexistence of the first WUS and the second NR channel is achieved.

FIG. 27 illustrates a schematic structural diagram of a communication device (a terminal or a network device) according to some exemplary embodiments of the present disclosure. The communication device includes: a processor 2701, a receiver 2702, a transmitter 2703, a memory 2704, and a bus 2705.

The processor 2701 includes one or more processing cores, and the processor 2701 runs various functional applications and performs information processing by running software programs and modules.

The receiver 2702 and the transmitter 2703 can be implemented as a communication assembly. The communication assembly may be a communication chip.

The memory 2704 is connected to the processor 2701 by the bus 2705.

The memory 2704 is configured to store at least one instruction, and the processor 2701, when loading and executing the at least one instruction, is caused to perform the processes of the method for receiving WUSs, the method for transmitting WUSs, or the method for configuring WUSs in the above method embodiments.

In addition, the memory 2704 may be implemented by any type of volatile or non-volatile storage device or combination thereof. The volatile or non-volatile storage device includes, but not limited to: a disk or optical disc, an electrically-erasable programmable read-only memory (EEPROM), an erasable programmable read-only memory (EPROM), a static random access memory (SRAM), a read-only memory (ROM), a magnetic memory, a flash memory, or a programmable read-only memory (PROM).

The embodiments of the present disclosure further provide a terminal. The terminal includes: a wake-up receiver, configured to receive a first WUS, wherein the first WUS indicates the reception information of a downlink control channel. The downlink control channel is a first NR channel, the first WUS and the first NR channel are both orthogonal frequency-division multicarrier signals, and the numerology of the first WUS is different from the numerology of the first NR channel.

The embodiments of the present disclosure further provide a terminal. The terminal includes: a wake-up receiver, configured to receive configuration information of a first WUS, wherein the configuration information is defined to configure at least one of the time domain position of the first WUS or the frequency domain position of the first WUS. The configuration pattern of the time-frequency resource of the first WUS is the same as the configuration pattern of the second NR channel.

The embodiments of the present disclosure further provide a network device. The network device includes: a transceiver, configured to transmit a first WUS, wherein the first WUS indicates the reception information of a downlink control channel. The downlink control channel is a first NR channel, the first WUS and the first NR channel are both orthogonal frequency-division multicarrier signals, and the numerology of the first WUS is different from the numerology of the first NR channel.

The embodiments of the present disclosure further provide a network device. The network device includes: a transceiver, configured to transmit configuration information of a first WUS, wherein the configuration information is defined to configure at least one of the time domain position of the first WUS or the frequency domain position of the first WUS. The configuration pattern of the time-frequency resource of the first WUS is the same as the configuration pattern of the second NR channel.

The embodiments of the present disclosure further provide a computer-readable storage medium storing one or more computer programs. The one or more computer programs, when loaded and run by a processor, cause the processor to perform the method for receiving WUSs, the method for transmitting WUSs, or the method for configuring WUSs as described above.

The embodiments of the present disclosure further provide a chip including one or more programmable logic circuits and/or one or more program instructions. The chip, when running, is caused to perform the method for receiving WUSs, the method for transmitting WUSs, or the method for configuring WUSs as described above.

The embodiments of the present disclosure further provide a computer program product. The computer program product includes one or more computer instructions stored in a computer-readable storage medium. The one or more computer instructions, when read from the computer-readable storage medium and executed by a processor, cause the processor to perform the method for receiving WUSs, the method for transmitting WUSs, or the method for configuring WUSs as described above.

The described above are merely exemplary embodiments of the present disclosure and are not intended to limit the present disclosure. Any modifications, equivalent substitutions, improvements, and the like, made within the spirit and principle of the present disclosure should fall within the protection scope of the present disclosure.

## Claims

1. A method for receiving wake-up signals, applicable to a terminal, the method comprising:
receiving a first wake-up signal, wherein the first wake-up signal is defined to indicate reception information of a downlink control channel;
wherein the downlink control channel is a first new radio (NR) channel, wherein the first wake-up signal and the first NR channel are both orthogonal frequency-division multicarrier signals, and a numerology of the first wake-up signal is different from a numerology of the first NR channel.

2. The method according to claim 1, wherein the numerology comprises a subcarrier spacing.

3. The method according to claim 1, wherein the numerology comprises a guard interval length.

4. The method according to claim 1, wherein the first NR channel comprises at least one of:
a channel in an NR system other than a synchronization signal/physical broadcast channel block (SSB) and a random access channel;
an NR data channel;
an NR feedback channel; or
an NR control channel.

5. The method according to any one of claims 1 to 4, further comprising:
receiving first configuration signaling from a network device, wherein the first configuration signaling is defined to configure the numerology of the first wake-up signal;
wherein the first configuration signaling is radio resource control (RRC) signaling, or physical layer signaling, or medium access control (MAC) layer signaling.

6. The method according to any one of claims 1 to 4, wherein
a modulation mode of the first wake-up signal is on-off keying (OOK); and
a modulation mode of the first NR channel is quadrature phase-shift keying (QPSK) or quadrature amplitude modulation (QAM).

7. The method according to any one of claims 1 to 4, wherein
the first wake-up signal and the first NR channel are transmitted in a time-division multiplexing mode.

8. The method according to claim 7, further comprising:
receiving second configuration signaling, wherein the second configuration signaling is defined to configure a time domain position of the first wake-up signal.

9. The method according to any one of claims 1 to 4, wherein
a frequency domain resource occupied by the first wake-up signal and a frequency domain resource occupied by the first NR channel are located in a same bandwidth part (BWP).

10. The method according to any one of claims 1 to 4, wherein
a frequency domain resource occupied by the first wake-up signal and a frequency domain resource occupied by the first NR channel are located in different bandwidth parts (BWPs).

11. The method according to claim 10, wherein
the frequency domain resource occupied by the first wake-up signal is located in a first BWP, and the frequency domain resource occupied by the first NR channel is located in a second BWP;
wherein the second BWP is a BWP occupied by the first NR channel.

12. The method according to claim 10, further comprising:
receiving third configuration signaling, wherein the third configuration signaling is defined to configure a frequency domain position of the first wake-up signal.

13. The method according to any one of claims 7 to 12, further comprising:
performing rate matching based on a rate matching position;
wherein the rate matching position is determined based on at least one of a time domain position of the first wake-up signal or a frequency domain position of the first wake-up signal.

14. The method according to any one of claims 1 to 4, wherein the first wake-up signal is a wake-up receiver (WUR) signal.

15. A method for configuring wake-up signals, applicable to a terminal, the method comprising:
receiving configuration information of a first wake-up signal, wherein the configuration information is defined to configure at least one of a time domain position of the first wake-up signal or a frequency domain position of the first wake-up signal;
wherein a configuration pattern of a time-frequency resource of the first wake-up signal is the same as a configuration pattern of a second new radio (NR) channel.

16. The method according to claim 15, wherein the second NR channel comprises at least one of:
a physical downlink control channel (PDCCH);
a channel state information-reference signal (CSI-RS);
a tracking reference signal (TRS);
a phase tracking reference signal (PTRS);
a physical broadcast channel (PBCH);
a synchronization signal/physical broadcast channel block (SSB); or
semi-persistent scheduling (SPS)-based physical downlink shared channel (PDSCH).

17. The method according to claim 16, wherein the second NR channel comprises the PDCCH, and the configuration information comprises at least one of:
configuration information of a control resource set of the first wake-up signal; or
configuration information of a search space of the first wake-up signal.

18. The method according to any one of claims 15 to 17, further comprising:
receiving the first wake-up signal, wherein the first wake-up signal is defined to indicate reception information of a downlink control channel;
wherein the downlink control channel is the second NR channel, the first wake-up signal and the first NR channel are both orthogonal frequency-division multicarrier signals, and a numerology of the first wake-up signal is different from a numerology of the second NR channel.

19. The method according to claim 18, wherein the numerology comprises a subcarrier spacing.

20. The method according to claim 18, wherein the numerology comprises a guard interval length.

21. The method according to any one of claims 15 to 17, further comprising:
receiving first configuration signaling from a network device, wherein the first configuration signaling is defined to configure the numerology of the first wake-up signal;
wherein the first configuration signaling is radio resource control (RRC) signaling, or physical layer signaling, or medium access control (MAC) layer signaling.

22. The method according to any one of claims 15 to 17, wherein
a modulation mode of the first wake-up signal is on-off keying (OOK); and
a modulation mode of the second NR channel is quadrature phase-shift keying (QPSK) or quadrature amplitude modulation (QAM).

23. The method according to any one of claims 15 to 17, wherein
the first wake-up signal and the second NR channel are transmitted in a time-division multiplexing mode.

24. The method according to claim 23, further comprising:
receiving second configuration signaling, wherein the second configuration signaling is defined to configure the time domain position of the first wake-up signal.

25. The method according to any one of claims 15 to 17, wherein
a frequency domain resource occupied by the first wake-up signal and a frequency domain resource occupied by the second NR channel are located in a same bandwidth part (BWP).

26. The method according to any one of claims 15 to 17, wherein
a frequency domain resource occupied by the first wake-up signal and a frequency domain resource occupied by the second NR channel are located in different bandwidth parts (BWPs).

27. The method according to claim 26, wherein
the frequency domain resource occupied by the first wake-up signal is located in a first BWP, and the frequency domain resource occupied by the second NR channel is located in a second BWP;
wherein the second BWP is a BWP occupied by the second NR channel.

28. The method according to claim 26, further comprising:
receiving third configuration signaling, wherein the third configuration signaling is defined to configure the frequency domain position of the first wake-up signal.

29. The method according to any one of claims 23 to 28, further comprising:
performing rate matching based on a rate matching position;
wherein the rate matching position is determined based on at least one of the time domain position of the first wake-up signal or the frequency domain position of the first wake-up signal.

30. The method according to any one of claims 15 to 17, wherein the first wake-up signal is a wake-up receiver (WUR) signal.

31. A method for transmitting wake-up signals, applicable to a network device, the method comprising:
transmitting a first wake-up signal, wherein the first wake-up signal is defined to indicate reception information of a downlink control channel,
wherein the downlink control channel is a first new radio (NR) channel, wherein the first wake-up signal and the first NR channel are both orthogonal frequency-division multicarrier signals, and a numerology of the first wake-up signal is different from a numerology of the first NR channel.

32. The method according to claim 31, wherein the numerology comprises a subcarrier spacing.

33. The method according to claim 31, wherein the numerology comprises a guard interval length.

34. The method according to claim 31, wherein the first NR channel comprises at least one of:
a channel in an NR system other than a synchronization signal/physical broadcast channel block (SSB) and a random access channel;
an NR data channel;
an NR feedback channel; or
an NR control channel.

35. The method according to any one of claims 31 to 34, further comprising:
transmitting first configuration signaling, wherein the first configuration signaling is defined to configure the numerology of the first wake-up signal;
wherein the first configuration signaling is radio resource control (RRC) signaling, or physical layer signaling, or medium access control (MAC) layer signaling.

36. The method according to any one of claims 31 to 34, wherein
a modulation mode of the first wake-up signal is on-off keying (OOK); and
a modulation mode of the first NR channel is quadrature phase-shift keying (QPSK) or quadrature amplitude modulation (QAM).

37. The method according to any one of claims 31 to 34, wherein
the first wake-up signal and the first NR channel are transmitted in a time-division multiplexing mode.

38. The method according to claim 37, further comprising:
transmitting second configuration signaling, wherein the second configuration signaling is defined to configure a time domain position of the first wake-up signal.

39. The method according to any one of claims 31 to 34, wherein
a frequency domain resource occupied by the first wake-up signal and a frequency domain resource occupied by the first NR channel are located in a same bandwidth part (BWP).

40. The method according to any one of claims 31 to 34, wherein
a frequency domain resource occupied by the first wake-up signal and a frequency domain resource occupied by the first NR channel are located in different bandwidth parts (BWPs).

41. The method according to claim 26, wherein
the frequency domain resource occupied by the first wake-up signal is located in a first BWP, and the frequency domain resource occupied by the first NR channel is located in a second BWP;
wherein the second BWP is a BWP occupied by the first NR channel.

42. The method according to claim 41, further comprising:
transmitting third configuration signaling, wherein the third configuration signaling is defined to configure a frequency domain position of the first wake-up signal.

43. The method according to any one of claims 37 to 42, further comprising:
transmitting fourth configuration signaling, wherein the fourth configuration signaling is defined to configure a rate matching position;
wherein the rate matching position is determined based on at least one of a time domain position of the first wake-up signal or a frequency domain position of the first wake-up signal.

44. The method according to any one of claims 31 to 34, wherein the first wake-up signal is a wake-up receiver (WUR) signal.

45. A method for configuring wake-up signals, applicable to a network device, the method comprising:
transmitting configuration information of a first wake-up signal, wherein the configuration information is defined to configure at least one of a time domain position of the first wake-up signal or a frequency domain position of the first wake-up signal;
wherein a configuration pattern of a time-frequency resource of the first wake-up signal is the same as a configuration pattern of a second new radio (NR) channel.

46. The method according to claim 45, wherein the second NR channel comprises at least one of:
a physical downlink control channel (PDCCH);
a channel state information-reference signal (CSI-RS);
a tracking reference signal (TRS);
a phase tracking reference signal (PTRS);
a physical broadcast channel (PBCH);
a synchronization signal/physical broadcast channel block (SSB); or
semi-persistent scheduling (SPS)-based physical downlink shared channel (PDSCH).

47. The method according to claim 46, wherein the second NR channel comprises the PDCCH, and the configuration information comprises at least one of:
configuration information of a control resource set of the first wake-up signal; or
configuration information of a search space of the first wake-up signal.

48. The method according to any one of claims 45 to 47, further comprising:
transmitting the first wake-up signal, wherein the first wake-up signal is defined to indicate reception information of a downlink control channel;
wherein the downlink control channel is a first NR channel, wherein the first wake-up signal and the first NR channel are both orthogonal frequency-division multicarrier signals, and a numerology of the first wake-up signal is different from a numerology of the first NR channel.

49. The method according to claim 48, wherein the numerology comprises a subcarrier spacing.

50. The method according to claim 48, wherein the numerology comprises a guard interval length.

51. The method according to any one of claims 45 to 47, further comprising:
transmitting first configuration signaling, wherein the first configuration signaling is defined to configure the numerology of the first wake-up signal;
wherein the first configuration signaling is radio resource control (RRC) signaling, or physical layer signaling, or medium access control (MAC) layer signaling.

52. The method according to any one of claims 45 to 47, wherein
a modulation mode of the first wake-up signal is on-off keying (OOK); and
a modulation mode of the first NR channel is quadrature phase-shift keying (QPSK) or quadrature amplitude modulation (QAM).

53. The method according to any one of claims 45 to 47, wherein
the first wake-up signal and the first NR channel are transmitted in a time-division multiplexing mode.

54. The method according to claim 37, further comprising:
transmitting second configuration signaling, wherein the second configuration signaling is defined to configure the time domain position of the first wake-up signal.

55. The method according to any one of claims 45 to 47, wherein
a frequency domain resource occupied by the first wake-up signal and a frequency domain resource occupied by the first NR channel are located in a same bandwidth part (BWP).

56. The method according to any one of claims 45 to 47, wherein
a frequency domain resource occupied by the first wake-up signal and a frequency domain resource occupied by the first NR channel are located in different bandwidth parts (BWPs).

57. The method according to claim 56, wherein
the frequency domain resource occupied by the first wake-up signal is located in a first BWP, and the frequency domain resource occupied by the first NR channel is located in a second BWP;
wherein the second BWP is a BWP occupied by the second NR channel.

58. The method according to claim 56, further comprising:
transmitting third configuration signaling, wherein the third configuration signaling is defined to configure the frequency domain position of the first wake-up signal.

59. The method according to any one of claims 43 to 48, further comprising:
transmitting fourth configuration signaling, wherein the fourth configuration signaling is defined to configure a rate matching position;
wherein the rate matching position is determined based on at least one of the time domain position of the first wake-up signal or the frequency domain position of the first wake-up signal.

60. The method according to any one of claims 45 to 47, wherein the first wake-up signal is a wake-up receiver (WUR) signal.

61. An apparatus for receiving wake-up signals, comprising:
a receiver module, configured to receive a first wake-up signal, wherein the first wake-up signal is defined to indicate reception information of a downlink control channel;
wherein the downlink control channel is a first new radio (NR) channel, wherein the first wake-up signal and the first NR channel are both orthogonal frequency-division multicarrier signals, and a numerology of the first wake-up signal is different from a numerology of the first NR channel.

62. An apparatus for configuring wake-up signals, wherein the apparatus comprises:
a receiver module, configured to receive configuration information of a first wake-up signal, wherein the configuration information is defined to configure at least one of a time domain position of the first wake-up signal or a frequency domain position of the first wake-up signal;
wherein a configuration pattern of a time-frequency resource of the first wake-up signal is the same as a configuration pattern of a second new radio (NR) channel.

63. An apparatus for transmitting wake-up signals, wherein the apparatus comprises:
a transmitter module, configured to transmit a first wake-up signal, wherein the first wake-up signal is defined to indicate reception information of a downlink control channel;
wherein the downlink control channel is a first new radio (NR) channel, wherein the first wake-up signal and the first NR channel are both orthogonal frequency-division multicarrier signals, and a numerology of the first wake-up signal is different from a numerology of the first NR channel.

64. An apparatus for configuring wake-up signals, wherein the apparatus comprises:
a transmitter module, configured to transmit configuration information of a first wake-up signal, wherein the configuration information is defined to configure at least one of a time domain position of the first wake-up signal or a frequency domain position of the first wake-up signal;
wherein a configuration pattern of a time-frequency resource of the first wake-up signal is the same as a configuration pattern of a second new radio (NR) channel.

65. A terminal, comprising: a wake-up receiver; wherein
the wake-up receiver is configured to receive a first wake-up signal, wherein the first wake-up signal is defined to indicate reception information of a downlink control channel;
wherein the downlink control channel is a first new radio (NR) channel, wherein the first wake-up signal and the first NR channel are both orthogonal frequency-division multicarrier signals, and a numerology of the first wake-up signal is different from a numerology of the first NR channel.

66. A terminal, comprising: a wake-up receiver; wherein
the wake-up receiver is configured to receive configuration information of a first wake-up signal, wherein the configuration information is defined to configure at least one of a time domain position of the first wake-up signal or a frequency domain position of the first wake-up signal;
wherein a configuration pattern of a time-frequency resource of the first wake-up signal is the same as a configuration pattern of a second new radio (NR) channel.

67. A network device, comprising: a transceiver; wherein
the transceiver is configured to transmit a first wake-up signal, wherein the first wake-up signal is defined to indicate reception information of a downlink control channel;
wherein the downlink control channel is a first new radio (NR) channel, wherein the first wake-up signal and the first NR channel are both orthogonal frequency-division multicarrier signals, and a numerology of the first wake-up signal is different from a numerology of the first NR channel.

68. A network device, comprising: a transceiver; wherein
the transceiver is configured to transmit configuration information of a first wake-up signal, wherein the configuration information is defined to configure at least one of a time domain position of the first wake-up signal or a frequency domain position of the first wake-up signal;
wherein a configuration pattern of a time-frequency resource of the first wake-up signal is the same as a configuration pattern of a second new radio (NR) channel.

69. A computer-readable storage medium, storing one or more computer programs, wherein the one or more computer programs, when loaded and run by a processor, cause the processor to perform the method for receiving wake-up signals as defined in any one of claims 1 to 14, or the method for configuring wake-up signals as defined in any one of claims 15 to 30, or the method for transmitting wake-up signals as defined in any one of claims 31 to 44, or the method for configuring wake-up signals as defined in any one of claims 45 to 60.

70. A chip, comprising: one or more programmable logic circuits and/or one or more program instructions, wherein the chip, when running, is caused to perform the method for receiving wake-up signals as defined in any one of claims 1 to 14, or the method for configuring wake-up signals as defined in any one of claims 15 to 30, or the method for transmitting wake-up signals as defined in any one of claims 31 to 44, or the method for configuring wake-up signals as defined in any one of claims 45 to 60.

71. A computer program product, comprising: one or more computer instructions stored in a computer-readable storage medium, wherein the one or more computer instructions, when read from the computer-readable storage medium and executed by a processor, cause the processor to perform the method for receiving wake-up signals as defined in any one of claims 1 to 14, or the method for configuring wake-up signals as defined in any one of claims 15 to 30, or the method for transmitting wake-up signals as defined in any one of claims 31 to 44, or the method for configuring wake-up signals as defined in any one of claims 45 to 60.
